# EUROPEAN PATENT APPLICATION

(11) **EP 1 065 816 A1**
(43) Date of publication of application: **03.01.2001**
(21) Application number: 98961456.5
(22) Date of filing: 21.12.1998
(51) Int. Cl.: H04H 7/00, H04N 5/222, H04N 5/262, H04N 17/00, G11B 19/02, G11B 20/10

(54) **METHOD AND APPARATUS FOR CONTROLLING DEVICE**

(30) Priority: 19.12.1997 JP 35173797; 24.12.1997 JP 35530697; 02.02.1998 JP 2114998; 23.03.1998 JP 7446298; 23.03.1998 JP 7446398
(71) Applicant: Sony Corporation, Tokyo 141-0001 (JP)
(72) Inventor: OKAYASU, Gentaro, Shinagawa-ku, Tokyo 141-0001 (JP); ITO, Norikazu, Shinagawa-ku, Tokyo 141-0001 (JP); MIZUTANI, Shintaro, Shinagawa-ku, Tokyo 141-0001 (JP); YAMAMOTO, Tsutomu, Shinagawa-ku, Tokyo 141-0001 (JP); SHIGATA, Taro, Shinagawa-ku, Tokyo 141-0001 (JP); SHIMIZU, Yoji, Shinagawa-ku, Tokyo 141-0001 (JP)
(74) Representative: Pratt, Richard Wilson
(86) International application number: JP9805785
(87) International publication number: WO9933205

(57) **Abstract**

A device control apparatus for controlling the state of use of a plurality of devices, the apparatus comprising: upper control terminal means for issuing a first control command instructing reserved use of the device; and device allocation control means for inhibiting upper control terminal means except for the upper control terminal means which issued the control command, of a plurality of upper control terminal means, from using the device of the reserved use instructed by the first control command, on the basis of the first control command from the upper control terminal means.

## Description

### Technical Field

This invention relates to a device control apparatus and method for controlling the state of use of a plurality of devices such as broadcasting equipments.

### Background Art

Conventionally, there has been used a broadcast transmission device for connecting broadcasting equipments such as an encoder, a decoder, a HDD, a VTR and a controller by a router as route switching means and carrying out input/output of AV data with a system integrating these equipments.

In this broadcast transmission device, a desired operation is carried out by controlling the broadcasting equipments in accordance with a predetermined procedure in a process of broadcast transmission or material editing.

Since each of the broadcasting equipments provided for the broadcast transmission device independently executes a control command, each broadcasting equipment is separately controlled.

However, as the control of the broadcasting equipments of the broadcast transmission device is separately carried out in accordance with a control device as described above, the procedure for control or maintenance of these equipments requires complicated operations.

Also, since the processing as described above varies in accordance with the type of the broadcasting equipment, it is difficult to reuse the control processing which is once produced.

### Disclosure of the Invention

In view of the foregoing status of the art, it is an object of the present invention to provide a device control apparatus and method for carrying out control to enable easy reuse of control processing without generating complicated processing regardless of the control target equipment.

### Brief Description of the Drawings

Fig. 1 is a block diagram showing the overall structure of a broadcast transmission system.
Fig.2 illustrates the operation of the broadcast transmission system.
Fig.3 shows resource management information in the broadcast transmission system.
Fig.4 shows the structure and operation in the case where a reservation command from among control commands is received in the broadcast transmission system.
Fig.5 is a flowchart for explaining a series of processing of a resource information management task.
Fig.6 is a block diagram showing the structure of a system controller used in the broadcast transmission system.
Fig.7 illustrates a series of processing carried out by the resource information management task which has received a resource reservation request.
Fig.8 is a flowchart for explaining a series of processing in the case where an execution management task has received a reservation cancel command.
Fig.9 is a flowchart for explaining a series of processing of the resource information management task which has received a reservation cancel request.
Fig. 10 illustrates the structure of a system controller for receiving a resource opening command.
Fig. 11 illustrates the operation of the system controller for receiving a resource opening command.
Fig. 12 illustrates the system controller corresponding to priority added to an opening command when a resource is already opened by another terminal user.
Fig. 13 is a flowchart for explaining the operation of the system controller of Fig. 12.
Fig. 14 is a flowchart for explaining the operation of the system controller of Fig. 12.
Fig. 15 is a flowchart for explaining a specific example for selecting an optimum resource from candidate devices in accordance with the state of use/non-use of each device.
Fig. 16 is a flowchart for explaining the operation of a specific example for selecting an optimum one of candidate devices in accordance with the state of use/non-use of each device.
Fig. 17 is a flowchart for explaining the operation of a specific example of an optimum one of candidate devices in accordance with the status of reservation of each device.
Fig. 18 is a flowchart for explaining the operation of a specific example of an optimum one of candidate devices in accordance with the fault state of each device.
Fig. 19 is a flowchart for explaining selection of the device which is carried out by an upper control device by combining the state of use/non-use of each device, priority at the time of use, reservation state and fault state of each device.
Fig.20 shows the specific structure in which device controller boards are stored in a casing.
Fig.21 illustrates the internal structure of a device controller board, connection with an external equipment, and allocation of equipment number and I/F CPU number.
Fig.22 is a block diagram showing a specific example of another structure of a system controller 14.
Fig.23 is a flowchart for explaining a series of processing of a resource request management task which has received a reproduction request.
Fig. 24 illustrates the drive ID.
Fig.25 is a block diagram showing the logical structure of an input/output processing section.
Fig.26 is a flowchart for explaining control processing of a port.
Fig.27 is a flowchart for explaining control of a channel.
Fig.28 shows the sequence of route control.
Fig.29 shows the schematic structure of a device using a pipe.
Fig.30 illustrates generation of a stream by an opening command.
Fig.31 illustrates an opening command.
Fig.32 is a flowchart showing the flow of opening of a stream by EMT.
Fig.33 is a flowchart showing the procedure for an upper control terminal to issue a command using the stream ID.
Fig.34 is a flowchart of an example in which a command issued by an upper control terminal has failed.
Fig. 35 illustrates extinction of a stream.
Fig.36 is a flowchart for explaining the process of extinction of a stream.
Fig.37 illustrates connection point control of an AV server in connecting streams.
Fig.38 is a flowchart for explaining connection point control of an AV server in connecting streams.
Fig.39 is a flowchart for explaining a series of processes of route control of an AV signal.
Fig.40 shows a specific example of a command in the case where an opening command is issued from an upper control terminal.

### Best Mode for Carrying Out the Invention

Preferred embodiments of the device control apparatus and method according to the present invention will now be described with reference to the drawings.

A broadcast transmission system of this embodiment enables a plurality of users (operators) to simultaneously operate files of a plurality of broadcasting devices from a plurality of upper application terminals. The plurality of users can simultaneously carry out editing and inspection of materials with respect to the broadcasting devices or transmission of broadcasting materials by operating the GUI (graphic user interface) of each terminal.

The broadcasting devices in this case include logical devices such as an input channel and an output channel, which will be described later, as well as physical devices such as a VTR (video tape recorder) and an editor used at a broadcasting station or the like, an AV (audio and/or video) server using a HD (hard disk) as a storage medium, and a switcher (or router).

The materials in this case are data including video and/or audio data.

In the following description of the embodiment, these terms are used in the above-described sense. The meanings of these terms are based on the foregoing explanation unless particularly specified.

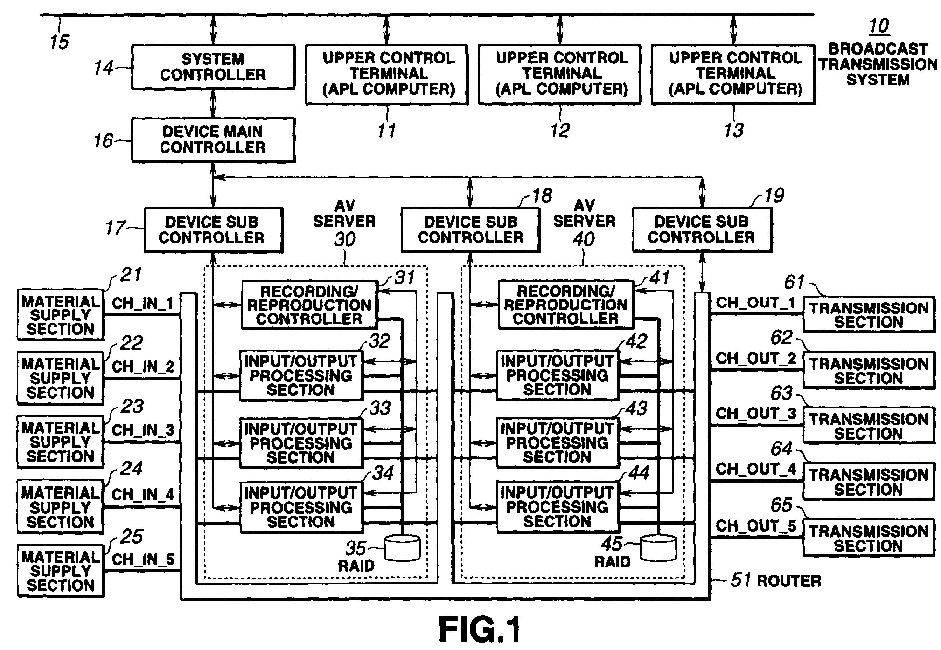

Fig. 1 shows the overall structure of a broadcast transmission system 10.

The broadcast transmission system 10 includes a plurality of upper application terminals (upper control terminals) 11, 12, 13, a system controller 14 according to the present invention, a local area network (LAN) 15 for connecting the plural upper control terminals 11, 12, 13 so as to carry out various communications, a device main controller 16 for controlling commands from the system controller 14 in real time, and a plurality of device sub controllers 17, 18, 19 for controlling a plurality of lower broadcasting devices, as shown in Fig. 1. The broadcast transmission system 10 also includes a plurality of material supply sections 21, 22, 23, 24, 25 for supplying the above-described materials, AV servers 30, 40 for storing the materials supplied from the material supply sections 21, 22, 23, 24, a router 51 for switching the plurality of inputs and outputting the input to one of a plurality of outputs, and a plurality of transmission sections 61, 62, 63, 64, 65 for actually transmitting the broadcasting materials.

The material supply sections 21, 22, 23, 24, 25 and the transmission sections 61, 62, 63, 64, 65 of the broadcast transmission system 10 shown in Fig.1 are constituted by five material supply sections and five transmission sections, respectively. However, it is a matter of course that this invention is not limited to such a structure. For example, a single material supply section and a single transmission section may be used. Alternatively, a greater number of material supply sections and transmission sections than those shown in Fig. 1 may be employed.

Each structure of the broadcast transmission system 10 of Fig.1 will now be described in detail.

As the user (operator) operates the GUI displayed on display means such as a monitor, not shown, the upper control terminals 11, 12, 13 produce the configuration of broadcasting programs, then produce a program configuration table for determining which material should be used for each configuration, and produce a cue sheet for determining which material should be actually transmitted at what time. Moreover, the upper control terminals 11, 12, 13 edit the materials stored in the AV servers 30, 40 as will be later described for broadcast transmission similarly by using the GUI, and carry out inspection for confirming the edited materials before the actual broadcast transmission time.

Also, applications for various other purposes operate on these control terminals 11, 12, 13.

The system controller 14 is located between the lower broadcasting devices and the upper control terminals 11, 12, 13. Various operation commands for executing the above-mentioned applications from the upper control terminals 11, 12, 13 are entered to the system controller 14 through the LAN 15, and the system controller 14 carries out various operations with respect to the lower broadcasting devices. The operation of this system controller 14 will be later described in detail.

The device main controller 16 transmits operation commands from the system controller 14 for carrying out various operation for the lower devices to the lower device sub controllers 17, 18, 19 to which the lower broadcasting devices for transmission are connected. Also, the device main controller 16 can transmit the status with respect to various operation commands from the connected device sub controllers 17, 18, 19 to the system controller 14.

The device sub controllers 17, 18, 19 are connected to the AV servers 30, 40 and the router 51, respectively, and control the AV servers 30, 40 and the router 51, respectively, as the lower broadcasting devices. The device sub controllers 17, 18, 19 transmit converted operation commands from the upper control terminals 11, 12, 13 to the connected AV servers 30, 40 and the router 51, and receive status information with respect to the operation commands from the AV servers 30, 40 and the router 51.

The AV server 30 is constituted by a plurality of input/output processing sections 32, 33, 34, a recording/reproduction controller 31, and a RAID 35 made up of a plurality of hard disks (HDs). The AV server 40 is constituted by a plurality of input/output processing sections 42, 43, 44, a recording/reproduction controller 41, and a RAID 45 made up of a plurality of hard disks (HDs).

The input/output processing sections 32, 33, 34, 42, 43, 44 receive the materials outputted from the router 51 and convert the materials into a format which enables storage onto the HDs as storage media. For example, when a SDI (serial digital data: in conformity to the standard of SMPTE-259M) signal is inputted, the SDI signal is decoded to extract a material superimposed on the SDI signal, and video data and/or audio data is compressed, if necessary.

The RAIDs 35, 45 are constituted by a plurality of HDDs (hard disk drives), and the above-described data from the input/output processing sections 32, 33, 34, 42, 43, 44 are written to each HDD. The RAIDs are constituted by a plurality of HDDs in order to improve the reliability of data to be recorded and in order to record the data to each HDD at the transfer rate of the data inputted to the input/output processing sections 32, 33, 34, 42, 43, 44. The RAIDs 35, 45 are constituted by, for example, RAID-3 for calculating and recording parity data of recording data to a dedicated HDD or RAID-1 for recording the same data to each of a pair of HDDs.

The recording/reproduction controllers 31 and 41 issue time slot signals through control lines to the plurality of input/output processing sections 32, 33, 34 and 42, 43, 44, respectively. The input/output processing sections 32, 33, 34, 42, 43, 44 are allowed to operate within the time slot periods indicated by the time slot signals allocated thereto. Since time slot periods allocated the input/output processing sections 32, 33, 34, 42, 43, 44 are short time periods, it looks from the upper control terminals 11, 12, 13 as if input/output of data were simultaneously carried out by the plural input/output processing sections 32, 33, 34, 42, 43, 44. When each of the input/output processing sections 32, 33, 34, 42, 43, 44 is to carry out data input/output processing of one channel, each of the AV servers 30, 40 of Fig. 1 can carry out simultaneous data input/output of three channels. The number of channels for data input/output of the AV servers 30, 40 is not limited to three and any plural number of channels may be used.

In memories, not shown, of the recording/reproduction controllers 31, 41, file system information is recorded indicating at which address on the logical address of HD the material starts being recorded on the file basis, over what address space the material is recorded, at which address on the logical address of HD the non-recording portion starts, and over what address space the non-recording area exists. On the basis of this file system information, operation commands from the upper control terminals 11, 12, 13 are interpreted. The commands, indicating which material should start being recorded at which logical address of a free area for how long and how long the recorded material should be read out from which address, are transferred to the RAIDs 35, 45. On the basis of these commands, the RAIDs 35, 45 actually read out a material recorded on the HD and write a material into a free area of the HD.

The material supply sections 21, 22, 23, 24, 25 supply materials to the AV servers 30, 40 through the router 51. The material supply sections 21, 22, 23, 24, 25 are devices for receiving ground waves or satellite waves transmitted from a VTR, a camcorder, a disk player, a satellite and other broadcasting stations, and supplying the received data.

The router 51 switches a plurality of inputs and switchingly outputs the input data from an output selected from a plurality of outputs.

The transmission sections 61, 62, 63, 64, 65 receive the broadcast transmission material outputted from the router 51 and actually transmit the material.

As described in the background art, in the case of the broadcast transmission system constituted by a plurality of upper control terminals, if the upper control terminals issue commands for operating the same control target terminal, the operation command of the control terminal which issued the command first is preferentially employed. For example, in the case where the lower broadcasting devices are constituted as shown in Fig. 1, when output of a certain material using the output channel of the input/output processing section 42 of the AV server 40 is intended by the plural upper control terminals, the AV server 40 carries out processing by preferentially employing the command from the upper control terminal which first transmitted the command indicating the intention to the AV server 40. In this case, it is impossible that another upper control terminal carries out an operation of a higher emergency degree or a higher priority using another input/output processing section 42.

In general, when a plurality of broadcasting devices are used for broadcasting services, the importance varies depending on the purpose.

For example, broadcasting of commercials at commercial broadcasting stations is one of the most important services for earning income. Therefore, the broadcasting stations need to securely and successfully transmit commercials at predetermined times.

On the other hand, there are various services provided from the broadcasting stations, such as storage of video materials, copying of video materials to other broadcasting devices, editing of materials, and inspection for confirming the contents of materials. These services may be carried out when the broadcasting devices are free and therefore are services of a lower emergency degree.

In short, when the plural broadcasting devices are controlled without discriminating a service of a high emergency degree or high importance and a service of a low, emergency degree, the broadcasting devices might be occupied by the service of a low emergency degree and the service of a high emergency degree might not be carried out.

In the present invention, designation commands for reserving the lower broadcasting devices by the plural upper control terminals are issued to the system controller. The system controller carries out control so that each upper control terminal can securely use the designated lower broadcasting device. When a request for use of the same lower broadcasting device is received from another upper control terminal, the system controller mediates the request.

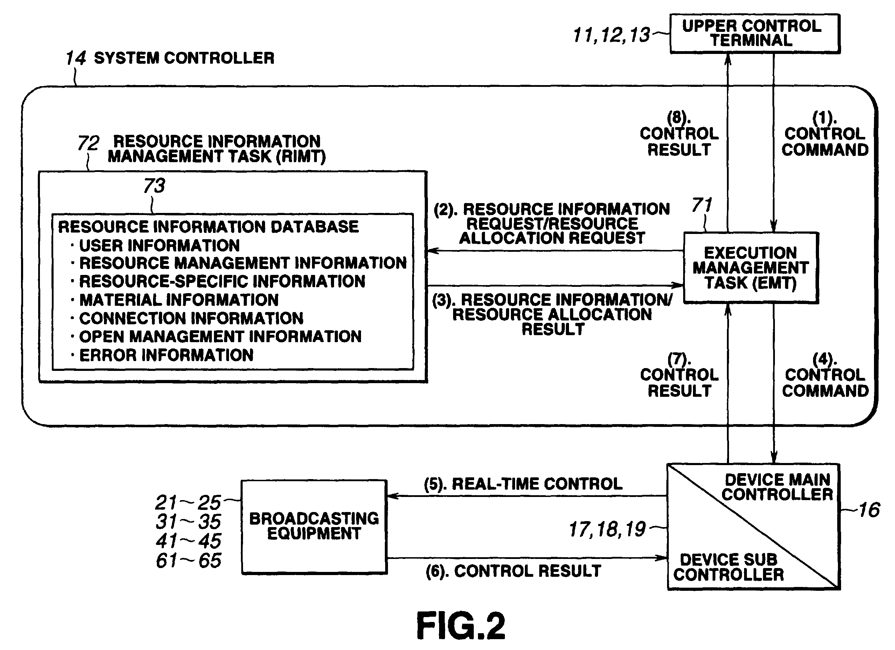

In order to explain the embodiment of the present invention, the functional block of the system controller 14 and the flow of data processed by the functional block are shown in Fig.2.

The system controller 14 is constituted by two tasks for executing upper control commands.

Specifically, the system controller 14 is constituted by an execution manager task (EMT) 71 for executing control commands from the upper control terminals 11, 12, 13, and a resource information management task 72 for managing information (resource information database) of the lower broadcasting devices by using a database 73 so that the execution management task 71 executes the control commands. The resource in this case means the above-described lower broadcasting device.

The resource information database 73 is resource management information held by the system controller 14 in advance. The resource information database 73 includes user information which stores information of the user (in this case, the upper control terminals 11, 12, 13) using the broadcast transmission system 10 connected to the system controller 14. The resource information database 73 also includes resource management information made up of the number of resources in the broadcast transmission system 10, the resource state as to whether or not each resource is available to the upper control terminals, and information common to the resources. The resource information database 73 further includes resource-specific information which stores various information depending on the type of resource, material information indicating which material is stored in which resource in the system 10, connection information indicating how each resource of the system is connected, opening management information indicating from which of the upper control terminals 11, 12, 13 an opening command as permission information for the use of the material stored in the resource is received, and error information which stores information indicating which resource has an error so as not to allocate the opening command to the target resource at the time of execution of the opening command from the upper control terminals 11, 12, 13 when there is a resource which cannot transmit the material for a certain reason even though the opening command is received. The resource management information will be later described in detail.

The operation of the system controller 14 of such a structure will now be described.

As shown in Fig.2, when a control command is issued from the upper control terminals 11, 12, 13, the execution management task 71 of the system controller 14 receives the control command. A resource information request or a resource allocation request is issued to the resource information management task 72 from the resource information database 73 on the basis of the information stored in the control command, so as to determine to which resource the control command should be issued on the basis of the resource-related information.

The resource information management task 72, which has received the resource information request, extracts the matching resource-related information from the user information and the resource management information of the resource information database 73 and transmits the information to the execution management task 71.

When the resource information management task 72 receives the resource allocation request from the execution management task 71, the resource matching the request is allocated from the resource management information, opening management information and error information of the resource information database 73, and the result of resource allocation is transmitted again to the execution management task 71.

Using the return information from the resource information management task 72, the execution management task 71 issues a control command storing that information to the device main controller 16.

The device main controller 16, which has received the control command from the execution management task 71 of the system controller 14, issues a control command to the device sub controller 17 connected to the corresponding resource.

The device sub controllers 17, 18, 19 convert the control command from the device main controller 16 to a command that can be executed by the lower broadcasting devices, and issue the converted control command to the broadcasting devices.

The broadcasting devices output the result of execution of the control command (status information) again to the device sub controllers 17, 18, 19 connected thereto, and the upper control terminals 11, 12, 13 which have issued the control command are notified of the control result from the device sub controllers 17, 18, 19 through the device main controller 16 and the system controller 14.

According to the present invention, in the system controller 14 having the above-described structure and operation, a resource reservation control command is issued from the upper control terminals 11, 12, 13, and reservation information is written into the resource management information of the resource information database 73 in accordance with the reservation control command, thus limiting the use by the other upper control terminals 11, 12, 13.

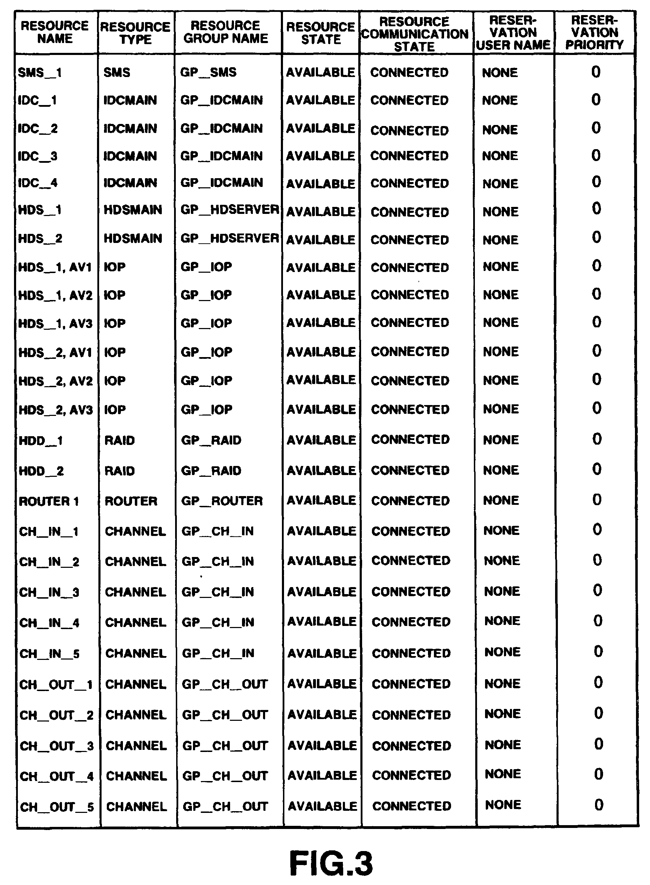

The system controller 14 in this case will now be described in detail. First, the resource management information of the resource information database 73 will be described. Fig.3 shows the resource management information in the present system.

The resource management information includes the resource name indicating the name of the lower broadcasting device used in the broadcast transmission system 10, the resource type indicating the type of the resource, the resource group name for handling resources of the same resource type as a group, the resource state indicating whether the resource is available or not, the resource communication state indicating the physical connection state of the resource, the reservation user name indicating whether or not a reservation command is received from the above-described upper control terminals 11, 12, 13 with respect to the corresponding resource, and the reservation priority of the resource.

The resource name is the name corresponding to the broadcasting device in the broadcast transmission system on the one-to-one basis. In the example shown in Fig.3, the resource name "SMS_1" indicates the system controller 14 in the broadcast transmission system 10 of Fig. 1. The resource name "IDC_1" indicates the device main controller 16. "HDS_1" indicates the AV server 30. "HDS_1.AV1" indicates the input/output processing section 32 of the AV server 30. "CH_IN_1" indicates the channel CH_IN_1 of the material supplied from the material supply section 21. In this manner, the resource name indicates the name of the broadcasting device and the name of the channel for input/output of each device.

The resource type indicates the type of each resource. In this broadcast transmission system, the resource type of each equipment type is determined. In Fig.3, the resource type of the resource name "SMS_1", that is, the resource type of the system controller 14 is "SMS". The resource types of the resource names "IDC_1", "IDC_2", "IDC_3", "IDC_4", that is, the resource types of the device controllers 16, 17, 18, 19 are the same resource type "IDCMAIN".

The resource group name is the name for the system controller 14 to handle resources of the same resource type as a group. The resource group name of the resource type "SMS" is "GP_SMS". The resource group name of the resource type "IDCMAIN" is "GP_IDCMAIN".

The resource state indicates whether each resource is available or unavailable. In the resource management information shown in Fig.3, all the resources are "available". The resource state as to whether each resource is available or unavailable can be determined by the upper control terminals 11, 12, 13.

The resource communication state indicates the physical connection state of each resource. When communication between the system controller 14 and another resource is possible, that is, when transmission of a control command is possible, "connected" is displayed. When communication is impossible, "disconnected" is displayed. In the resource management information shown in Fig.3, all the resources are "connected". That is, communication with the system controller 14 is possible and transmission of a control command to each resource is possible.

The reservation user name is used in the following manner. That is, when a reservation command for occupying the corresponding resource and carrying out operation is issued from the upper control terminals 11, 12, 13, the user name is registered to the section of reservation user name of the corresponding resource. In the broadcast transmission system 10 of Fig. 1, the user name of the upper control terminals 11, 12, 13 is registered. In the resource management information of Fig.3, no resource is reversed by the upper control terminals 11, 12, 13, and "none" is displayed. The operation of rewriting the resource management information based on the reservation command from the upper control terminals 11, 12, 13 will be later described in detail.

The reservation priority is used in the following manner. That is, if the priority of reservation is inserted in the reservation command from the connected user, that is, from the upper control terminals 11, 12, 13 in the broadcast transmission system 10 of Fig. 1, the priority is written into this section of priority reservation. In the resource management information shown in Fig.3, the reservation priority is all "0", which indicates that state where no resource reservation is made and no priority is designated.

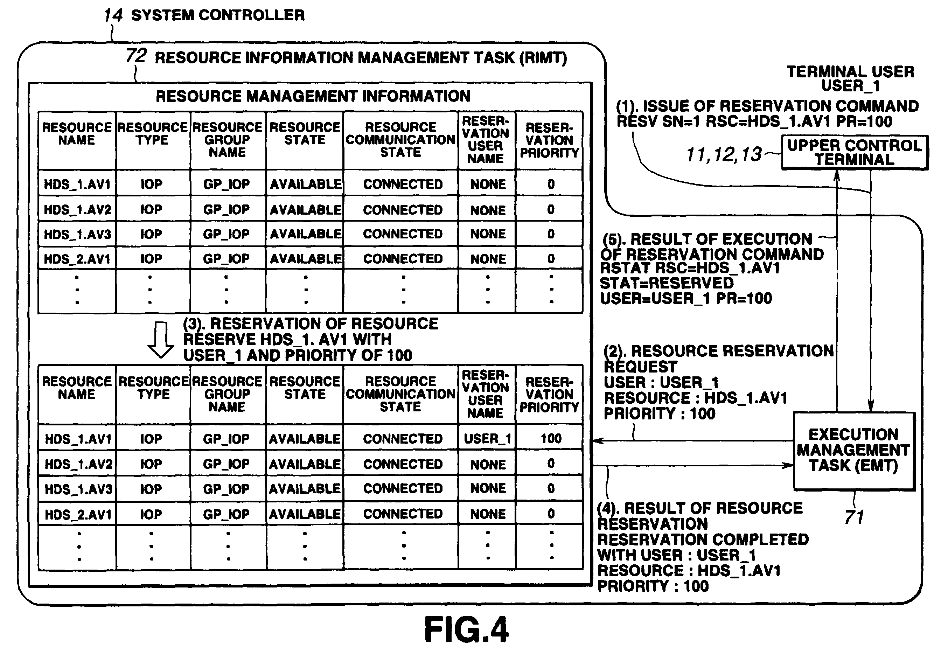

The operation of the system controller 14, which has received the reservation command from the upper control terminals 11, 12, 13, will now be described in detail with reference to Fig.4.

The structure of the system controller 14 and the flow of data after the control command is received are already described with reference to Fig.2. Fig.4 shows the structure and operation in the case where the reservation command from among the control commands is received.

As described above, the system controller 14 is constituted by the execution management task 71 for receiving the control command, that is, the reservation command from the upper control terminals 11, 12, 13 and executing the command, and the resource information management task 72 for carrying out information management related to each broadcasting device, that is, each resource.

The resource information management task 72 related to the reservation command utilizes the resource management information of the resource information database 73. The resource management information includes the resource name, resource type, resource group name, resource state, resource communication state, reservation user name and reservation priority, as described above. When the reservation command is issued from the upper control terminals 11, 12, 13, requirements are written into the sections of reservation user name and reservation priority of the resource management information. This operation will be later described in detail.

The operation of the system controller 14 will now be described.

When a certain resource is to be occupied to carry out a certain operation, the upper control terminals 11, 12, 13 issue the reservation command. Specifically, the reservation command is issued when the terminal user carries out operation, editing and inspection of the program configuration table and cue sheet information displayed on the display means such as the monitor of the upper control terminals 11, 12, 13 or directly enters the command on the command line. Except for the direct entry, the reservation command is automatically issued by a specified operation of the above-mentioned operations, an operation related to resource reservation on the GUI screen displayed on the monitor, or an editing operation of the material which is about to be on the air.

The specific reservation command is described as follows.
RESV SN =1 RSC = HDS_1.AV1 PR = 100 (command 1)

In this configuration of the command 1, "RESV" is the command name. In this case, it indicates the resource reservation command. When this RESV command is received by the execution management task of the system controller 14, it is determined that the reservation command is received from the upper control terminals 11, 12, 13. "SN" is ID unique to each control command. When receiving the command and notifying of the result of execution, this ID is added to the result of execution and the upper control terminals 11, 12, 13 is notified of the result. Thus, the upper control terminals 11, 12, 13 which have issued the RESV command can learn that the notified result is the status information with respect to the RESV command. On the side of the system controller 14, the processing for discriminating the command in accordance with the ID and notifying the upper control terminals 11, 12, 13 of the discrimination result can be simplified.

"RSC" indicates the target resource. In the case of the command 1, it indicates a resource having the resource name "HDS_1.AV1". This resource name corresponds to the resource name held in the resource management information and indicates the input/output processing section 32 of the AV server 30.

"PR" indicates the above-described reservation priority. As the value of "PR" is smaller, the priority is higher. In the case of the command 1, the priority is "100".

Thus, the command 1 means 'Make "RESV", i.e., reserve the resource "HDS_1.AV1", i.e., the input/output processing section 32 of the AV server 30, with the name of the user who has issued the command, i.e., the name of the terminal user using the upper control terminals 11, 12, 13 (or the name of the upper control terminals 11, 12, 13) with the priority of "100".'

The user name is not expressed in the reservation command. However, when the upper control terminals 11, 12, 13 are connected to the broadcast transmission system 10 or physically connected to the system controller 14, information as to which user (in this case, which of the upper control terminals 11, 12, 13) subsequent control commands come from can be transferred from the execution management task 71 to the resource information management task 72, by issuing the control command for registering the user name to the system controller 14 from the connected upper control terminals 11, 12, 13 and holding the execution management task 71 or the resource information management task 72 of the system controller 14.

The execution management task 71 of the system controller 14, which has received the reservation command from the upper control terminals 11, 12, 13, extracts necessary information from the reservation command, then adds information of the terminal user as the reservation user, and issues a resource reservation request to the resource information management task 72.

The resource reservation request issued by the execution management task 71 when the command 1 is received includes the following information.
- Reserved resource name: HDS_1.AV1
- User: USER_1
- Priority: 100
This information is entered to the resource information management task.

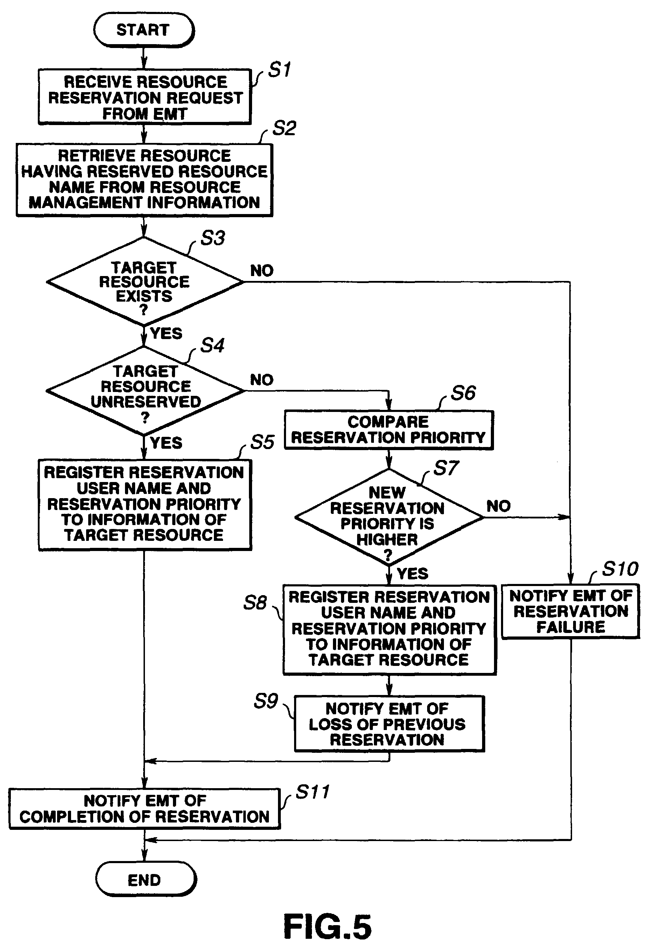

The resource information management task 72, which has received the resource reservation request from the execution management task 71, rewrites the reservation user name and reservation priority of the resource management information. A series of processing of the resource information management task 72 will be described with reference to Fig.5.

When the resource reservation request is received from the execution management task 71 (step S1), the resource information management task 72 retrieves a resource having the same resource name as the reserved resource name of the reservation request from the resource management information (step S2). In the case of the above-described resource reservation request, a resource having the resource name of HDS_I.AV1 is retrieved from the resource management information.

If the target resource is found in the resource management information as a result of retrieval (YES at step S3), the processing shifts to step S4. If the target resource is not found, the processing shifts to step S10.

At step S4, whether the target resource unreserved or not is discriminated in accordance with whether the reservation user name is written in the section of reservation user name of the retrieved target resource. If the target resource is unreserved, the processing shifts to step S5. If the target resource is already reserved, the processing shifts to step S6.

At step S5, the reservation user name is written into the section of reservation user name of the target resource of the resource management information and the reservation priority is written in accordance with the resource reservation request. In the case of the above-described resource reservation request, "USER_1" is written into the section of reservation user name corresponding to the resource name of HDS_1.AV1 and the reservation priority "100" is written.

Next, the processing shifts to step S11 and the successful result of the resource reservation request is notified of. The user name, resource name and priority are added to the reservation result, and the execution management task 71 is notified of the result ((4) of Fig.5). The notification of the reservation result when the above-described resource reservation request has become successful informs that reservation has been successfully done with the user name "USR_1", the resource name "HDS_1.AV1" and the priority "100" added to the reservation result. Then, the processing ends.

On the other hand, if the target resource is already reserved (that is, NO) at step S4, the processing shifts to step S6, and the priority of the already reserved resource and the priority of the resource reservation request are compared with each other. Specifically, the value written into the priority section of the resource management information and the value of the priority inserted into the new resource reservation request are compared with each other.

Then, the processing shifts to step S7. If, as a result of comparison at step S6, the priority of the new resource reservation request is higher than the priority written in the resource management information, that is, if the value of the priority of the new resource reservation request is smaller than the value of the already written priority, the processing shifts to step S8 and the target resource of the resource management information is rewritten by using the user name and priority of the new resource reservation request. Then, the execution management task 71 is notified of loss of the previous reservation due to the new reservation (step S9). The processing then shifts to step S11 and the execution management task 71 is notified of success of reservation. Then, the processing ends.

If, at step S7, the priority of the new resource reservation is lower than the priority already written in the resource management information, that is, if the value of the priority of the new resource reservation is greater than the value of the already written priority, the processing shifts to step S10. Since the priority of the new resource reservation is low, the execution management task 71 is notified of failure of the resource reservation request. Then, the processing ends.

If the target resource does not exist in the resource management information at step S3 even though the new resource reservation request is notified of, the processing shifts step S10 and the execution management task 71 is notified of failure of the reservation request.

As a result of the foregoing processing, the resource information management task 72 notifies the execution management task 71 of the resource reservation result. If the reservation is successfully done, information such as the registered user name, resource name and priority is added to the reservation result and notified of, as described above.

In this resource reservation, if the target resource does not exist (NO at step S3) even though the new reservation request is notified of, or if the priority of the resource of the new reservation request is lower than the priority of the resource already written in the resource management information at step S7, the execution management task 71 is notified of the reservation result indicating failure of reservation at step S10. In this case, an error code indicating the cause of failure is added and notified of.

The resource reservation is carried out by the foregoing operation.

In this manner, as the system controller 14 carries out reservation and registration for reserving occupancy of the broadcasting devices from the upper control terminals 11, 12, 13, reservation of the target devices (resources) can be carried out in accordance with the priority of the operation and service of the plural upper control terminals 11, 12, 13. Thus, the reserved device will not be occupied by other users and the user who has reserved the device can securely use that device. Therefore, it is possible to avoid serious accidents such that an output unit (the input/output processing section 32 of the AV server 30 in Fig. 1) for outputting a material for broadcasting cannot be allocated and such that the material cannot be transmitted at the time of broadcasting.

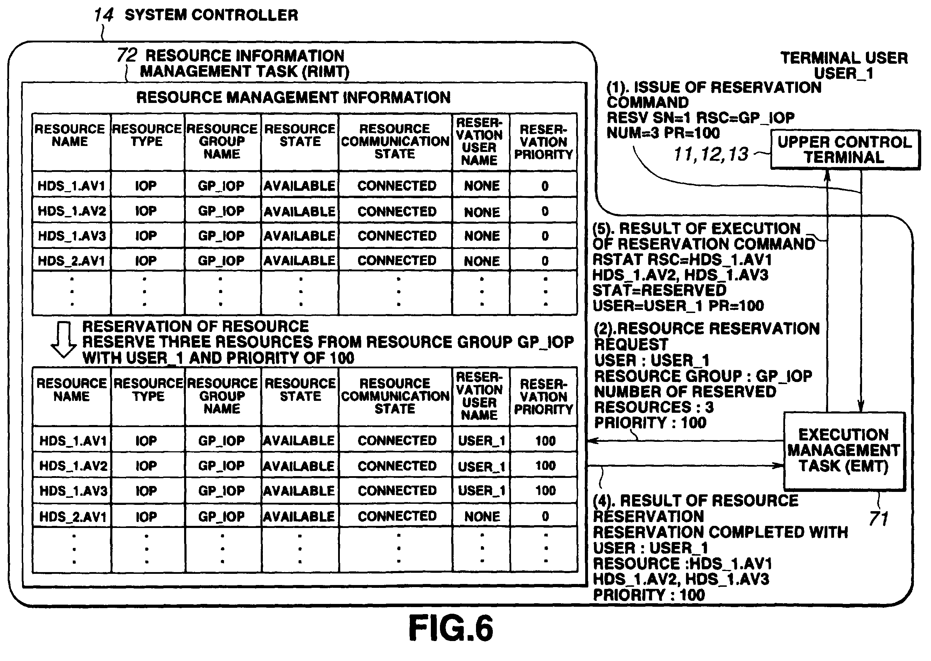

Moreover, the system controller 14 of the broadcast transmission system 10 can simultaneously reserve a plurality of resources within the same resource group. In short, the above-described resource reservation can be simultaneously carried out with respect to resource names of the same resource group in the resource management information. This is hereinafter described in detail with reference to Figs.6 to 8.

As shown in Fig.6, the structure of the system controller 14 is the same as the structure in the case of the above-described single resource reservation, and is constituted by the execution management task 71 and the resource information management task 72.

The upper control terminals 11, 12, 13 issue the following simultaneous reservation command of plural resources to the system controller 14.
RESV SN = 1 RSC = GP_IOP NUM = 3PR = 100 (command 2)

This reservation command may be directly issued similarly from the command line, or may be automatically issued when the above-described various operations are executed. In the command 2, similarly to the command 1, the type of command is "RESV" indicating the reservation command, and the command ID is "1". The reservation target resource is the resource group "GP_IOP" indicated by GP_IOP, and the reservation priority is "100". Moreover, the number of target resources to be simultaneously reserved "NUM" is "3". Therefore, the command 2 means 'Reserve three of the resources included in the resource group "GP_IOP" with the name of the user who has issued the reservation command with the priority of 100.'

When the upper control terminal 11, 12, 13 issue the command 2 to the system controller 14 ((1) of Fig.6), the execution management task 71 of the system controller 14 receives the command and issues the resource reservation request to the resource information management task 72 ((2) of Fig.6). Information such as the user name, resource group name, number of reserved resources and priority is added to this resource reservation request. From the command 2, the information of
- User name: : USER_1
- Resource group: : GP_IOP
- Number of reserved resources: : 3
- Priority: : 100
is extracted and transmitted to the resource information management task 72.

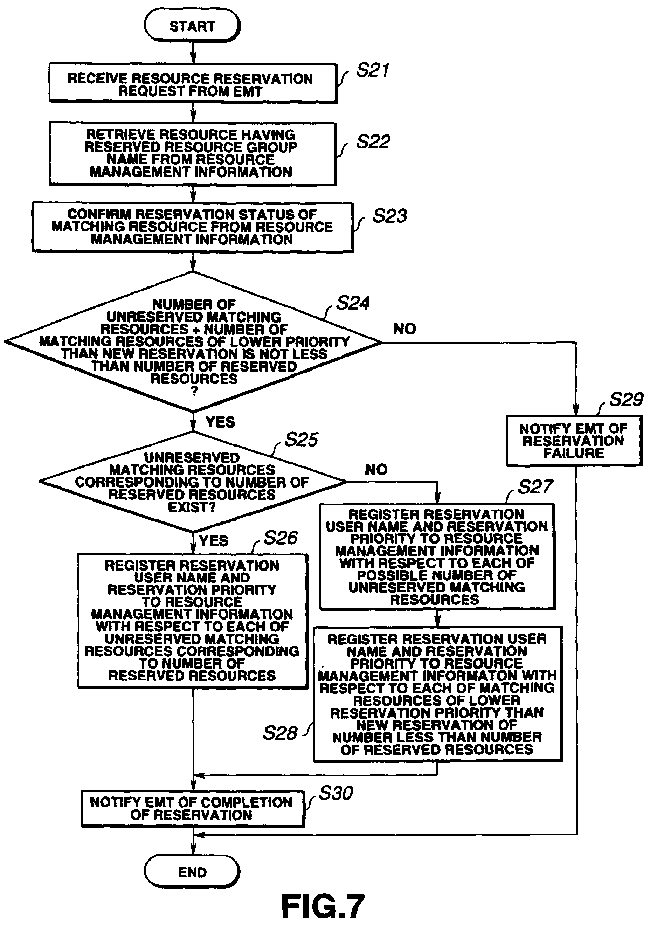

A series of processing carried out by the resource information management task 72, which has received the resource reservation request, will now be described in detail with reference to Fig.7.

When the simultaneous reservation command of plural resources from the execution management task 71 is received at step S21, the processing shifts to step S22 and the target resource group written in the resource management information is retrieved in accordance with the resource group name of the reservation request. Specifically, the resource matching the reserved resource group name in the reservation request is retrieved from the section of resource group name of the resource management information. For example, in the case of the above-described resource reservation request, the resource having the same resource group name as the reserved resource group "GP_IOP" is retrieved from the resource management information.

Then, the processing shifts to step S23 and the reservation status of the resource matching the resource reservation request is confirmed as a result of retrieval. Specifically, the number of unreserved resources and the number of resources having a lower priority than the priority of the received resource request (new resource request) are confirmed with respect to the reservation target resource.

The processing then shifts to step S24. The total of the number of unreserved resources and the number of resources having a lower priority confirmed at step S23 is calculated, and whether or not this total is equal to or more than the number of reserved resources of the resource request is discriminated. If the total is equal to or more than the number of reserved resources, the processing shifts to step S25. If the total is less than the number of reserved resources, the processing shifts to step S27.

At step S25, it is discriminated whether or not the number of unreserved matching resources from among the total is equal to the number of reserved resources. At this point, it is discriminated whether or not the number of unreserved matching resources confirmed at step S24 is equal to the number of reserved resources of the resource reservation request. In the case of the above-described resource reservation request, since the number of reserved resources is "3", it is discriminated whether the number of unreserved resources of the resource group "GP_IOP" of the resource management information is three or not.

If the number of unreserved matching resources is equal to the number of reserved resources at step S25, the processing shifts to step S26 and the reservation user name and reservation priority are written to the unreserved matching resources corresponding to the number of reserved resources in the resource management information. In the example shown in Fig.6, there are four resources indicating the resource group "GP_IOP" of the resource management information. With respect to three of the four resources, that is, resources having the resource names "HDS_1.AV1", "HDS_1.AV2" and "HDS_1.AV3" corresponding to the number of reserved resources, "USR_1" and "100" are written into the section of reservation user name and the section of reservation priority, respectively, in the resource management information so as to carry out registration.

When there are more unreserved resources than the number of reserved resources, the resources may be selected in the order from the top of the resources which are suitably selected and registered to the resource management information, or may be selected in the order from the bottom of the registered resources. Alternatively, the resources may be selected in accordance with a certain algorithm. In this embodiment, the resources are selected in the order from the top of the registered resources.

The processing then shifts to step S30 and the execution management task 71 is notified of the reservation result. In this notification of the reservation result, the name of the user who has made reservation, resource name and priority are added as additional information.

On the other hand, if unreserved matching resources corresponding to the number of reserved resources do not exist at step S25, the processing shifts to step S27.

At step S27, the reservation user name and reservation priority are registered with respect to each of the unreserved matching resources. Specifically, in the section of reservation user name and the section of reservation priority of the matching resources of the resource management information, the contents of the respective sections of the resource reservation request are written to carry out registration.

The processing then shifts to step S28 and the reservation user name and reservation priority are written with respect to the resource having a lower priority than the priority of the resource reservation request, from among the resources matching the resource reservation request and having the reservation user name and reservation priority already written. Since it is discriminated at step S24 that the total of the number of unreserved resources and the number of resources having a lower priority than the priority of the new reservation is greater than the number of reserved resources of the new reservation, the resources corresponding to the number of reserved resources already exist at this stage. Therefore, the entire new resource reservation request can be registered to the resource management information at steps S27 and S28. Then, the processing shifts to step S30 and the execution management task 71 is similarly notified of the reservation result. After the notification of the result, the processing ends.

If the total of the number of unreserved matching resources and the number of matching resources having a lower priority than the priority of the new reservation is less than the number of reserved resources of the new resource reservation request (that is, NO) at step S24, a notification of failure of the resource reservation request is issued to the execution management task 71. Then, the processing ends.

The execution management task 71, which has received the resource reservation result, notifies the upper control terminals 11, 12, 13 which have issued the reservation command, of the result of execution of the reservation command ((5) of Fig.6).

As simultaneous reservation of plural resources is carried out as described above, the upper control terminals 11, 12, 13 can carry out simultaneous processing using plural resources corresponding to the priority of operation and service. Similarly to the single reservation, the reserved device will not be occupied by other users and the user who has reserved the device can securely use that device. Thus, accidents at the time of broadcasting can be prevented.

Next, the upper control terminals 11, 12, 13 issue to the system controller 14 a reservation cancel request indicating reservation cancel of the resource reserved in the above-described manner. Thus, even though the operation or service has been completed with the reservation user name and priority written in the resource management information, other users cannot occupy the device for operations or services of a high priority.

Therefore, when a desired important operation such as editing or inspection of a high priority is completed at the upper control terminals 11, 12, 13, the upper control terminals 11, 12, 13 issue to the system controller 14 a reservation cancel command for commanding reservation cancel of the reserved resource. The reservation cancel command will now be described in detail.

The upper control terminals 11, 12, 13 issue the following resource cancel command to the system controller 14.
RELS SN =1 RSC = HDS_1.AV1 (command 3)
RELS SN = 1 RSC = HDS_1.AV1 PR = 100 (command 4)

There are two types of reservation cancel commands because the reservation cancel command differs between when the reservation is made by the user himself/herself and when the reservation is made by another user.

The command 3 is a reservation cancel command for the resource reserved by the user himself/herself The command 4 is a reservation cancel command for the resource reserved by another user.

Both of the commands 3 and 4 have the command type of "RELS" indicating the resource cancel command, the command ID of "1" and the cancel target resource of "HDS_1.AV1". That is, these commands are control commands indicating resource reservation cancel to the input/output processing section 32 of the AV server 30 in the broadcast transmission system 10. The command 4 has a description indicating the priority. The priority in the reservation cancel command "RELS" means cancellation of a reserved resource having a higher reservation priority than this priority.

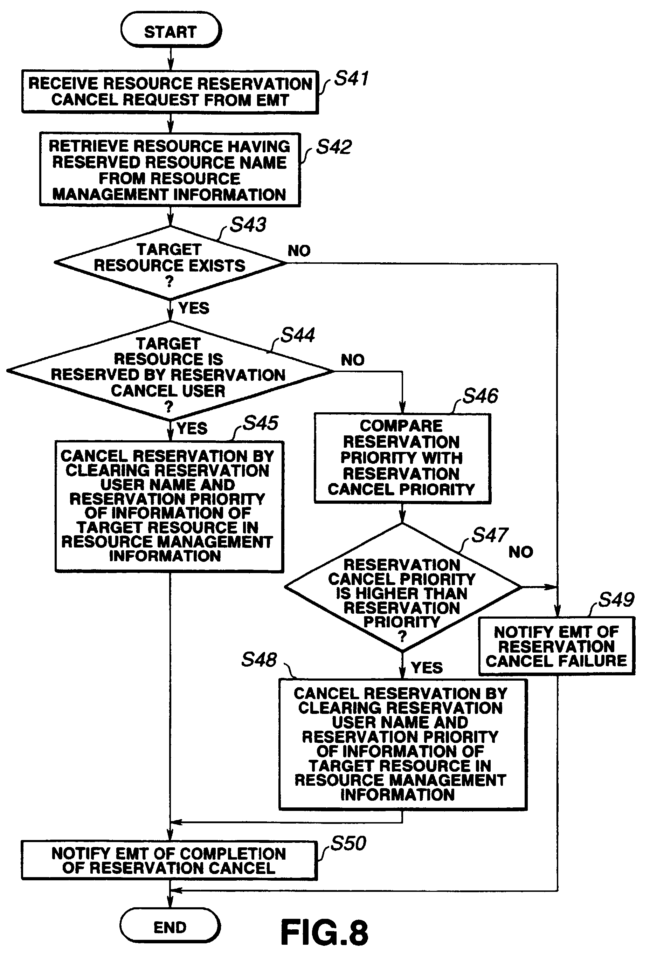

When the system controller 14 has received this control command, the control command is entered to the execution management task 71 similarly to the case of resource reservation and the resource cancel request is issued to the resource information management task 72. The resource information management task 72, which has received the resource cancel request, cancels reservation information written in the resource management information in accordance with the processing shown in Fig.8.

Specifically, as shown in Fig.8, when the execution management task 71 has received the reservation cancel command like the command 3, the resource information management task 72 receives the resource reservation cancel request from the execution management task 71 (step S41). In issuing this resource reservation cancel request, the execution management task 71 adds the user name and resource name, similarly to the case of the resource reservation request, and further adds the reservation cancel priority when cancelling the resource reserved by another user.

Then, the processing shifts to step S42 and the target resource registered to the resource management information is retrieved by using the resource name of the resource reservation cancel request received from the execution management task 71. In the case of the reservation cancel request of the commands 3 and 4, the resource having "HDS_1.AV1" written in the section of resource name of the resource management information is retrieved.

The processing then shifts to step S43 and it is discriminated whether the target resource exists or not on the basis of the resource retrieval of step S42. If the target resource exists, the processing shifts to step S44. If the target resource does not exist, the processing shifts to step S49.

At step S44, it is discriminated whether or not the reservation cancel user who has issued the reservation cancel command is registered with respect to the target resource. This can be discriminated in accordance with whether the target resource is registered in the resource management information at step S43 and whether the user who has issued the reservation cancel command is registered in the section of reservation user name of that resource. If the user who has issued the reservation cancel command is registered in the section of reservation user name, the processing shifts to step S45. If not, that is, if the target resource is reserved with another user name, the processing shifts to step 46.

At step S45, the user name and priority of the target resource written in the resource management information are cleared to cancel reservation.

The processing then shifts to step S50. The execution result indicating completion of reservation cancel is transmitted to the execution management task 71 and the processing ends.

On the other hand, if the target resource is registered with another user at step S44, the processing shifts to step S46, where the reservation priority of the resource management information of the target resource and the reservation cancel priority as the reservation priority of the reservation cancel request are compared with each other. In the case of the command 4, the reservation priority of the target resource "HDS_1.AV1" registered to the resource management information and the reservation cancel priority "100" of the command 4 are compared with each other. As a matter of course, the reservation user name of the target resource is not the name of the user who has issued the reservation cancel command.

The processing the shifts to step S47 and it is discriminated whether or not the reservation cancel priority of the resource cancel command is higher than the reservation priority written in the resource management information. Specifically, the value of reservation cancel priority and the value of reservation priority are compared with each other.

If it is discriminated at step S47 that the reservation cancel priority is higher than the reservation priority, the processing shifts to step S48 and the reservation user name and priority of the target resource written in the resource management information are cleared to cancel registration. Then, the processing shifts to step S50.

On the other hand, if it is discriminated at step S47 that the reservation cancel priority is not higher than the reservation priority, the processing shifts to step S49. At this point, since the reserved resource has a higher priority than the resource as the target of reservation cancel, it is indicated that the importance of the operation and service of the upper control terminals 11, 12, 13 using the reserved resource is accordingly higher. A notification of failure of the reservation cancel command is issued to the execution management task 71 and the processing ends.

In accordance with the above-described operation, the resource information management task 72 issues the result of the resource reservation cancel request to the execution management task 71, and the execution management task 71, which has received the result, transmits the result of execution of the reservation cancel request to the upper control terminals 11, 12, 13.

In this manner, the user can cancel reservation of the resource which is reserved by the user himself/herself, or reservation of the resource which is reserved by another user.

Similarly to the case of reservation, reservation cancel can be carried out with respect to not only a single reserved resource but also a plurality of resources or a resource group.

The command in this case is expressed as follows.
RELS SN = 1 RSC = GP_IOP (command 5)
RELS SN= 1 RSC = GP_IOP PR = 100 (Command 6)
"RSC" indicating the resource group can be added. Both of the commands 5 and 6 are reservation cancel commands for the resource group "GP_IOP". In accordance with whether or not the command has "PR" indicating the reservation cancel priority, it can be discriminated whether the command is the cancel command (command 5) for the resource group reserved by the user himself/herself or the cancel command (command 6) for the resource group reserved by another user. Similarly to the foregoing other commands, this control command is issued from the upper control terminals 11, 12, 13 when carrying out direct entry on the command line or various operations.

When the execution management task 71 of the system controller 14 has received the reservation cancel command for the resource group from the upper control terminals 11, 12, 13, a reservation cancel request for the resource group is issued to the resource information management task 72. When issuing the reservation cancel request, the execution management task 71 adds the reserved resource group name, reservation cancel user name and reservation cancel priority.

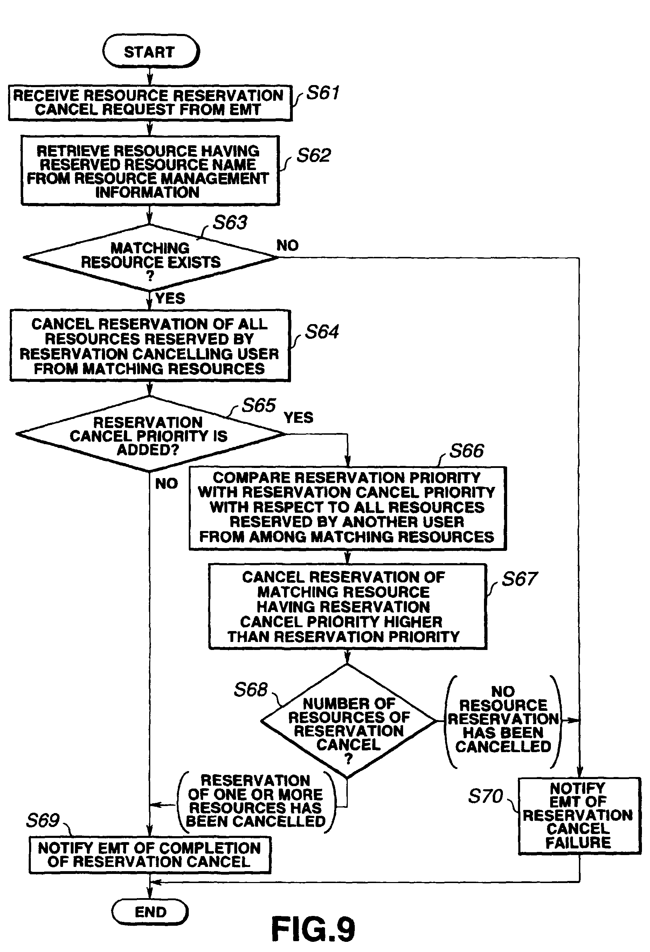

The resource information management task 72, which has received the reservation cancel request, executes a series of processing shown in Fig.9.

Specifically, when the execution management task 71 has received the resource reservation cancel request at step S61, the processing shifts to step S62 and the corresponding resource of the resource management information is retrieved by using the resource group name of the cancel target, which is additional information of the resource reservation cancel request. In the case of the commands 5 and 6, resources having the same resource group name written in the resource management information are retrieved by using the resource group name "GP_IOP" of the cancel target added to the resource cancel command.

The processing the shifts to step S63 and it is discriminated whether or not the matching resource group exists on the basis of the result of retrieval. If the resource group name of the reservation cancel target is found in the resource management information (YES), the processing shifts to step S64. If not, the processing shifts to step S70.

At step S64, reservation of all the resources of the resource group reserved by the reservation cancel user, from among the matching resources, is cancelled. That is, the entire section of reservation user name of the resources corresponding to the reservation cancel user of the resource cancel request, from among the registered matching resources in the resource management information, is cleared. For example, when the command 5 is issued from the upper control terminals 11, 12, 13 by the user "USER_1", the reservation user name of the resources registered with the reservation user name "USER_1", from among the corresponding resources in the resource management information registered with the resource group name "GP_IOP", is cleared. By thus clearing the reservation user name, reservation cancel is carried out at this step.

The processing then shifts to step S65 and it is discriminated whether the reservation cancel priority is added or not. Whether the reservation priority is added or not can be discriminated in accordance with whether or not the reservation priority is added to the resource cancel request issued by the execution management task 71. When the execution management task 71 has received the command 6, the execution management task 71 adds the reservation cancel priority and issues the resource cancel request to the resource information management task 72. That is, if reservation cancel is carried out with respect to the resource group reserved with another reservation user name, the processing shifts to step S66. If reservation cancel is carried out with respect to the resource group reserved by the user himself/herself, the processing shifts step S69.

At step S66, with respect to all the resources of the resource group reserved by another user from among the matching resources, the reservation priority registered to the resource management information and the reservation cancel priority added to the resource cancel command are compared with each other. That is, the value of reservation priority of the target resource in the resource management information and the value of reservation cancel priority are compared with each other.

Then, the processing shifts to step S67 and reservation of the matching resource having the reservation cancel priority higher than the reservation priority is cancelled.

The processing then shifts to step S68 and it is discriminated whether reservation of any number of resources has been cancelled or not. If reservation of at least one resource is cancelled at step S67, the processing shifts to step S69 and the result of reservation cancel indicating completion of the reservation cancel command is issued to the execution management task 71. Then, the processing ends.

If it is discriminated at step S68 that no resource reservation is cancelled, failure of reservation cancel is indicated. Therefore, the processing shifts to step S70 and the execution management task 71 is notified of the result of reservation cancel indicating failure of reservation cancel. Then, the processing ends.

In accordance with the foregoing structure and operation, reservation cancel of the reserved resource can be carried out.

Meanwhile, the upper control terminals 11, 12, 13 can issue an opening command for requesting permission of occupancy of the equipment, by making reservation of a resource or reservation of a resource group. In accordance with this opening command, the broadcasting device which made reservation, that is, the equipment of the resource is actually occupied. After that, control commands of various operations to be carried out by the upper control terminals 11, 12, 13 are issued and processing of resources based on the control commands can be executed.

The opening command issued by the upper control terminals 11, 12, 13 to the system controller 14 is described, for example, as follows.
OPEN SN = 1 MD = PLAY RSC = HDS_1.AV1 PR = 100 (command 7)

The type of control command is "OPEN" indicating the opening command. The ID of this opening command is "1". "MD" indicates the mode for carrying out opening (occupancy of the equipment). The command also has "REC" indicating recording or "PLAY" indicating reproduction. In the case of the command 7, reproduction is indicated. The resource as the opening command target is "HDS_1.AV1" and the priority of the opening command is "100". This priority is not the priority in making reservation but the priority of the opening command itself.

As will be later described in detail, the priority of the opening command itself is not directly related with the priority of reservation.

Thus, the command 7 means 'Open the resource "HDS_1.AV1" in the reproduction mode with the priority of 100.'

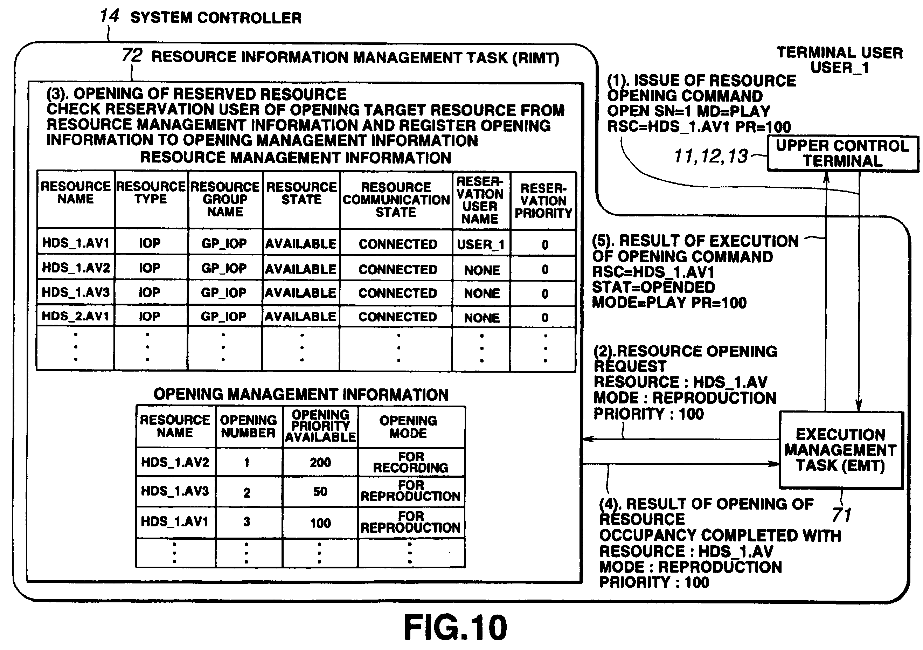

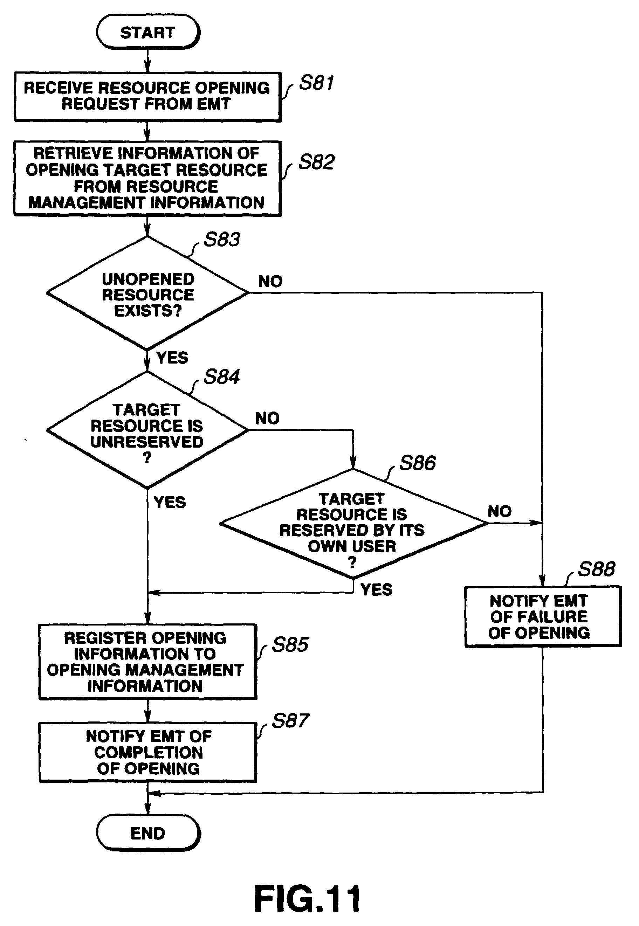

The structure and operation of the system controller 14 receiving the resource opening command will now be described in detail with reference to Figs. 10 and 11.

Similarly to the above-described case of reservation, the system controller 14 is constituted by the execution management task 71 and the resource information management task 72 as shown in Fig. 10. The execution management task 71 receives the opening command from the upper control terminals 11, 12, 13 and issues the result of execution to the upper control terminals 11, 12, 13. The resource information management task 72 has resource management information, and responds to a request from the execution management task 71 by writing or deleting information registered to the resource management information. Moreover, the resource information management task 72 has resource opening management information, which will be later described, and an entry including information such as the user name for occupancy in accordance with the opening command and the use state mode is prepared for each resource. As will be later described in detail, management of the opening command is carried out by adding, rewriting or deleting the information entry corresponding to the opening command with respect to the resource opening management information.

The operation thereof will be described hereinafter.

First, the upper control terminals 11, 12, 13 issue the opening command described by the command 7 to the system controller 14 (1). The execution management task 71 of the system controller 14 receives the issued resource opening command.

From the received resource opening command, the execution management task 71 issues a resource opening request to which the target resource, mode and priority are added, to the resource information management task 72 (2). This resource opening request having the following information added thereto is issued to the resource information management task 72 when the opening command of the command 7 is received.
- Resource: : HDS_1.AV
- Mode: : reproduction
- Priority: : 100
Having received this opening command, the resource information management task 72 executes a series of processing shown in Fig. 11.

Specifically, when the resource opening request is received from the execution management task 71 (step S81), the resource as the opening target in the resource management information is retrieved by using the resource name added to the opening request (step S82). For example, when the above-described opening request is received, the resource having the same resource name as the resource name "HDS_1.AV1" added to the opening request is retrieved from the resource management information.

Then, the processing shifts to step S83 and it is discriminated whether or not the resource as the opening target retrieved at step S82 actually exists in the resource management information. If the opening target resource exists, the processing shifts to step S84. If not, that is, if the opening target resource of the opening command issued by the upper control terminals 11, 12, 13 does not exist, failure of the opening command itself is indicated. Therefore, the processing shifts to step S88 and the execution management task 71 is notified of the result of resource opening indicating failure of the opening command.

On the other hand, if the opening target resource exists (YES at step S83), the processing shifts to step S84 and it is discriminated whether the target resource is reserved or not. This can be discriminated in accordance with whether the reservation user name and reservation priority of the opening target resource are written or not.

If the target resource is unreserved, the processing shifts to step S85 and opening information is registered to the opening management information. The opening management information is one of data in the resource information database 163 (Fig.3) held by the resource information management task 72. The opening management information is constituted by the resource name of the opening target, the opening number indicating the order of issue of the opening command, the priority with respect to the opening command described in the opening command, the opening mode, and the user name indicating the terminal user, as shown in Fig. 10.

Registration of the opening information is carried out by newly writing information into the opening management information thus constituted, in accordance with the resource opening request. That is, when the resource opening request is entered to the resource information management task 72, the following information is written into the opening management information shown in Fig. 10.
- Opening resource name: : HDS_1.AV
- Opening number: : 3 (automatically appended in the writing order)
- Opening priority: : 100
- Opening mode: : reproduction

The processing then shifts to step S87 and the result of opening with respect to the opening request is issued to the execution management task 71. Then, the processing ends.

If the target resource is reserved (NO) at step S84, the processing shifts to step S86 and it is discriminated whether or not the target resource is reserved by the user himself/herself. That is, if the section of reservation user name of the opening target resource in the resource management information is coincident with the name of the user who carries out opening, the processing shifts again to step S85. If not, the opening processing has become failure. Therefore, after the processing shifts again to step S88, the processing ends.

On completion of this series of processing, the resource information management task 72 notifies the execution management task 71 of the result of opening with respect to the resource opening request ((4) of Fig.10). If the opening request is successful, the resource name of the successful opening, opening mode and priority are added to the result of opening, which is issued to the execution management task 71, as shown in Fig. 10.

If the processing with respect to the opening request is failure, an error code is added to the result of opening, which is issued to the execution management task 71.

Having received the result of resource opening, the execution management task 71 transmits the result of execution of the opening command to the upper control terminals 11, 12, 13 which issued the opening command.

As shown in Fig. 10, the result of execution of the opening command having the resource name of the successful opening, opening mode and priority added thereto is transmitted. In the case of failure of opening, the error code indicating the cause of failure is added to the result.

In accordance with the foregoing resource opening operation, the reserved resource is opened only to the user who carried out the reservation operation and opening of the reserved resource to users other than the reservation user becomes impossible. When the opening command is not accepted, the system controller 14 does not accept the control commands indicating various operations of the upper control terminals 11, 12, 13 started by the opening command, and consequently, competition among the resources from the plural upper control terminals 11, 12, 13 can be prevented.

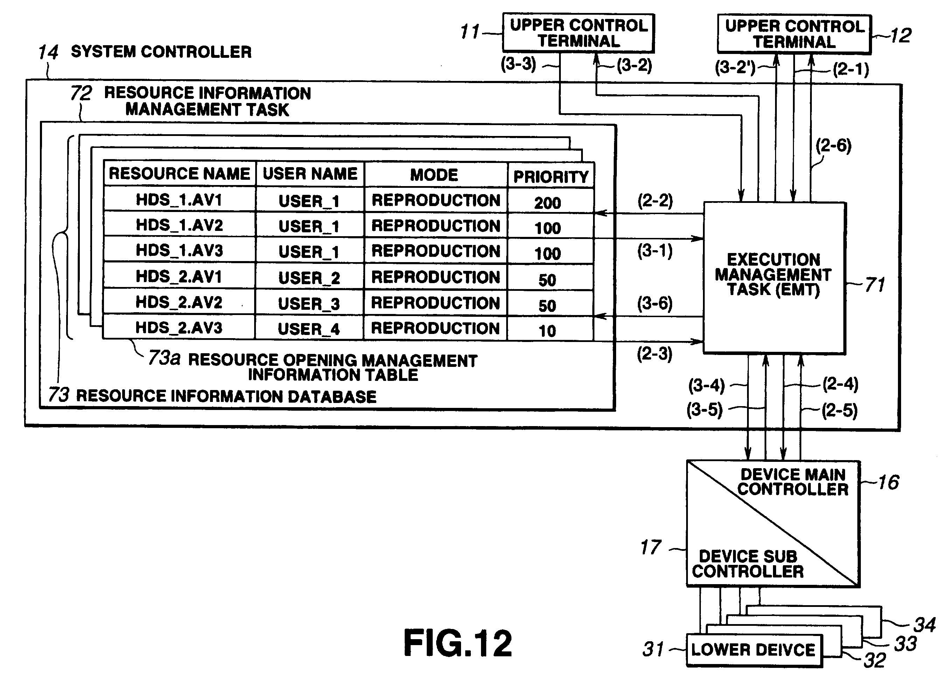

In the foregoing example, processing of the opening command with respect to the reserved resource is described. Specifically, in the foregoing case, the opening target resource is not occupied by another terminal user. Next, the processing of the system controller 14 and the device controllers 16, 17, and a series of processing for controlling the lower broadcasting device in accordance with the priority added to the opening command, in the case where a desired resource is already opened by another terminal user even though the opening command with respect to the desired resource is issued, will now be described with reference to Fig. 12.

If the opening target resource is already reserved by another user, the opening command itself ends in failure.

The processing of the system controller 14 including this point will be described in hereinafter.

The system controller 14 is constituted by the execution management task 71 and the resource information management task 72, as shown in Fig. 12.

The execution management task 71 executes control commands including the opening command from the upper control terminals 11, 12, 13, and carries out communication between the upper control terminals 11, 12, 13 and the device main controller 16. Also, the execution management task 71 transmits information about various control commands transmitted from the upper control terminals 11, 12, 13 and the device controller 16 to the resource information management task 72, if necessary.

The resource information management task 72 has a plurality of resource information databases 73. The resource information management task 72 processes requests related with various control commands transmitted from the execution management task 71 by using the resource opening management information from the database related with the opening command, and transmits the result to the execution management task 71.

The operation after receiving the opening command will now be described.

First, an opening command with respect to a resource which the user wishes to occupy is transmitted from the upper control terminal 12 to the system controller 14 (2-1). Only after transmitting this command and receiving status information indicating occupancy permission transmitted from the system controller 14, the upper control terminal can carry out the above-described various operations, editing and inspection by issuing control commands for carrying out the operations to the lower broadcasting device, as described above.

The opening command is described as follows.
OPEN SN =1 MD = PLAY RSC = HDS_1.AV PR = 100 (command 8)

The description of the opening command itself is similar to that of the command 7, that is, in the case where the opening command is issued after the target resource is reserved.

The execution management task 71 of the system controller 14, which has received the opening command expressed by the command 8 from the upper control terminal 12, extracts necessary information from information described in the opening command with reference to a resource opening management information table 73a, and transmits an opening request with respect to the opening command to the resource information management task 72 (2-2). This opening request, too, is transmitted with the resource name, user name, mode and priority added thereto as additional information.

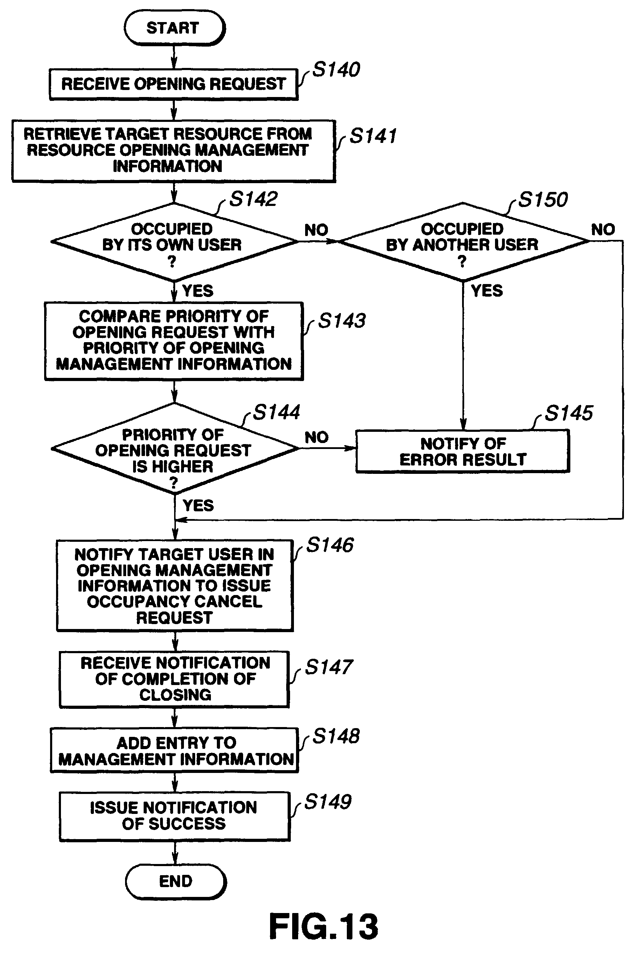

Having received the opening request, the resource information management task 72 processes the opening request on the basis of a series of processing shown in Fig. 13. This processing will be hereinafter described in detail.

When the opening request is received from the execution management task 71 (step S140), the corresponding resource in the resource opening management information 73a is retrieved by using the target resource name added to the opening request (step S141).

The processing then shifts to step S142 and it is discriminated whether or not the target resource with the name of the user himself/herself exists in the resource opening management information 73a. This resource opening management information 73a adds entry with respect to the resource as the target of the opening command on the basis of the opening request, as shown in Fig. 12. Specifically, the resource information management task 72, having received the opening request, adds entry using the resource name, user name, mode and priority added to the opening request. However, if the opening command with respect to the same resource was previously issued by the same user, entry cannot be simply added.

If the target resource with the same user name already exists in the resource opening management information 73a, the processing shifts to step S143.

At step S143, the priority of the target resource entered to the resource opening management information and the priority of the target resource of the opening request are compared with each other.

If, as a result of comparison, the priority of the resource of the opening request is higher, the processing shifts to step S146. If the priority of the resource of the opening request is not higher than the priority of the target resource already registered for opening, the processing shifts to step S145.

At step S145, since the already registered opening command has a higher priority, this opening command has ended in failure. The result with respect to this opening command is transmitted together with an error code to the execution management task 71.

On the other hand, if the opening command of this time has a higher priority than the registered opening command at step S144, the resource information management task 72 issues an opening cancel request with respect to the registered user to the execution management task 71 (step S146). Having received this opening cancel request, the execution management task 71 issues an occupancy cancel request to the registered user, that is, the upper control terminals 11, 12, 13. The upper control terminals 11, 12, 13, having received the occupancy cancel request, issue a CLOSE command as a control command for cancelling occupancy of the opened resource to the system controller 14. The execution management task 71, having received the CLOSE command, issues a closing request for cancelling the occupied (opened) resource to the device controller 16. On receiving the closing request, the device main controller 16 transmits the closing request from the device sub controller 17 to the lower device and executes the CLOSE command from the upper control terminals 11, 12, 13. The target resource of this closing request has its occupied state cancelled. Having received the status information 73 via the device controllers 17, 16 from the target resource, the execution management task 71 issues a notification of completion of closing indicating that opening of the target resource is cancelled to the resource information management task 72 (3-6 of Fig.12).

The resource information management task 72, having received the notification of completion of closing, erases the target resource of a low priority already entered to the resource opening management information 73a (step S147). Then, the resource information management task 72 newly adds entry to the resource opening management information 73a so as to realize the opening command received from the upper control terminals 11, 12, 13. Thus, the target resource is registered with the priority of the opening command issued by the upper control terminals 11, 12, 13 (step S148).

The processing then shifts to step S149 and the execution management task 71 is notified of the result with respect to the opening request (2-3 of Fig. 12). Then, the processing ends.

Meanwhile, if the target resource is not registered by the user himself/herself at step S142, the processing shifts to step S150 and it is discriminated whether or not the target resource is already occupied by another user. If the target resource is occupied by another user, that is, if the target resource is used by another user, the opening command ends in failure and the processing shifts again to step S145.

If the target resource is not occupied by another user at step S142, the target resource is not occupied by the user himself/herself or any other user in the resource opening information management table. That is, since the target resource is not occupied, the processing shifts to step S148 to newly add entry and the execution management task 71 is notified of the result of execution (step S149).

In this embodiment, a new opening command ends in failure if an opening command is already issued by another user and the target resource is occupied. The priority of the user by another user is regarded as being important, and still another user cannot occupy the resource even if he/she tries to do so.

With respect to the opening command for the reserved resource, if a certain user issues a reservation command for a certain resource and carries out the opening command after the reservation command shown in Fig. 12 so as to enter information to the resource opening management information 73a, and then the same user issues an opening command for the same resource, the priority of the opening command already registered to the entry and the priority of the new opening command are compared with each other. Thus, the process to reach "YES" at step S142 of Fig. 13 is carried out.

As described above, since the system controller 14 in this broadcast transmission system 10 is provided with the function to execute the opening command with its priority designated, a highly efficient system can be realized in which the opening command of a high priority can be executed so that the broadcasting device can be used preferentially for the operation of a high priority.

In addition, in this system 10, the opening target resource group is designated, that is, the opening command is issued with respect the resource group and the optimum resource is selected and occupied from the resource group so as to realize the operation and service of a high priority.

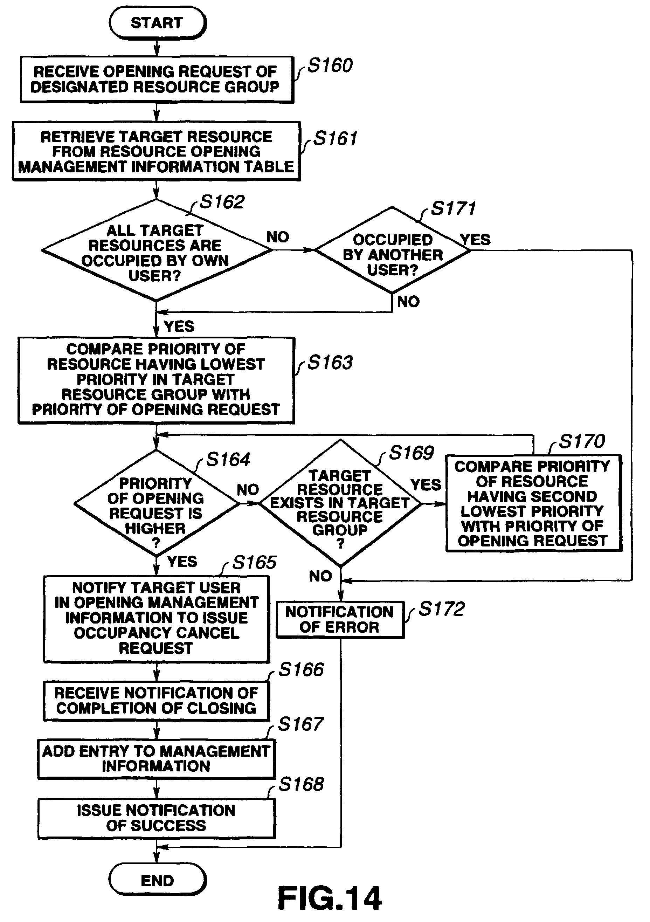

This processing will now be described in detail with reference to Fig. 14.

The structure of this system controller 14 is the same as the structure shown in Fig. 12. The system controller 14 is constituted by the execution management task 71 and the resource information management task 72.

An opening command designating the resource group is issued from the upper control terminals 11, 12, 13. An example of the command is described as follows.
OPEN SN = 1 MD = PLAY RSC = GP_IOP PR = 100 (command 9)

This command is substantially similar to the command 7 and carries out resource designation by designating the resource group. This command means 'Open the resource group "GP_IOP" in the reproduction mode with the priority of "100".' Similarly to the other control commands, this command, too, is automatically issued during direct entry on the command line or editing operation or the like on the display means such as a monitor, not shown, of the upper control terminals 11, 12, 13.

The execution management task 71 of the system controller 14, having received this opening command, issues an opening request with respect to the designated resource group to the resource information management task 72.

Having received this opening request, the resource information management task 72 executes a series of processing shown in Fig. 14, thereby processing the received opening request.

Specifically, as shown in Fig. 14, when the resource information management task 72 has received the opening request designating the resource group (step S160), the target resource is retrieved from the resource opening management information 73 (step S161).

The processing then shifts to step S162 and it is discriminated whether or not all the target resources are occupied in accordance with the opening command issued by the user himself/herself.

If the result at step S162 is YES, that is, if all the target resources are registered to the resource opening management information in accordance with the opening command issued by the user himself/herself, processing for comparing the priority and carrying out entry registration so as to newly execute the opening command or preventing execution of the opening command is carried out.

At step S163, the resource of the lowest priority in the target resource group is selected, and the priority of that resource and the priority of the opening request are compared with each other.

The processing then shifts to step S164 and it is discriminated whether the priority of the opening request is higher or not on the basis of the result of comparison.

If the priority of the opening request is higher (YES at step S164), a control command is issued to the execution management task 71 so that the execution management task 71 issues an occupancy cancel request to the occupant target user (step S165).

The execution management task 71, having received the command, issues the occupancy cancel command to the upper control terminal used by the target user. The upper control terminal, having received this occupancy cancel command, issues a CLOSE command indicating the control command of opening cancel to the system controller 14. When the execution management task 71 of the system controller 14 has received the CLOSE command, a closing request indicating target resource occupancy cancel is issued to the device main controller 16, and the device main controller 16 issues an occupancy cancel command to the device sub controller 17 and the target resource. When the result of the closing request is sent back to the execution management task 71 from the target resource via the device sub controller 17 and the device main controller 16, the execution management task 71 issues a notification of completion of closing to the resource information management task 72.

The resource information management task 72, having received the notification of completion of closing (step S166), deletes the target resource of the low priority from the entry registration of the resource management information task 72 and registers the target resource, priority and user name of the new opening request to the resource management information task 72 (step S167).

Then, the processing shifts to step S168 and the execution management task 71 is notified of the result with respect to the opening request. In this case, information indicating success of opening is added to the result which is notified of.

The execution management task 71, having received the result, issues an initialization request indicating occupancy of the target resource by the user via the device main controller 16 and the device sub controller 17.

Meanwhile, if the priority of the opening request is not higher than the priority of the already registered target resource (NO) at step S164, the processing shifts to step S169 and it is discriminated whether or not the target resource exists in the target resource group.

If the target resource does not exist in the resource opening management information (NO at step S169), the opening command issued by the upper control terminal ends in failure and the execution management task 71 is notified of the result having error information added thereto.

If the target resource exists in the registered resource opening management information (YES) at step S169, the processing shifts to step S170 and the priority of the resource having the second lowest priority and the priority of the target resource of the opening request are compared with each other. Then, the processing shifts again to step S164.

Meanwhile, if all the target resources are not occupied by the user himself/herself (NO) at step S162, the processing shifts to step S171 and it is discriminated whether or not the target resource is occupied by another user. If the target resource is occupied by another user (YES), the opening command ends in failure and the processing shifts again to step S172. If the target resource is not occupied by another user (NO), the processing shifts again to step S163. Then, the priority is compared and entry is added to the resource opening management information, thus carrying out registration with respect to the opening command.

As described above, in this broadcast transmission system 10, the operation and service with respect to a resource of a high priority can be carried out by the upper control terminal by selecting the optimum target resource in the resource group in accordance with the priority, as well as the opening command with the resource name.

In this broadcast transmission system, when a privileged priority is given and an opening command designating this priority is issued by the upper control terminal, the resource in use is forcedly closed and then occupied. For example, when "PR = 0" is designated by the opening command, it is assumed that this privileged priority is designated and the resource which is occupied and used is forcedly closed. However, this cannot be applied when the target resource is reserved.

In the above-described embodiment, the priority is used for preferential reservation of the broadcasting device, that is, the resource, or for the resource opening command from the upper control terminals 11, 12, 13 to the system controller 14. In both cases, the upper control terminals 11, 12, 13 express the broadcasting device in the control command issued to the system controller. In short, the upper control terminals 11, 12, 13 can preferentially use or occupy a resource by designating the resource.

In the following description, the upper control terminals 11, 12, 13 do not directly designate the resource name in the control command but designate a file in which desired AV (audio or video) data is stored, thus checking available broadcasting devices.

In the broadcast transmission system constituted as shown in Fig. 1, the upper control terminals 11, 12, 13 issue a request for use of an AV data file, then causes the system controller 14 to retrieve candidate devices, and causes the system controller 14 to select optimum broadcasting device, that is, the optimum resource from the candidate devices. The operation of the selected one resource is controlled by the device main controller 16 and the device sub controller 17 and is used for processing such as editing of a desired AV data file.

First, the operation of the system controller 14 to retrieve candidate resources will be described. In this case, selection of the optimum resource in accordance with each of the state of use/non-use, priority at the time of use, selection/reservation state and fault state of each resource will be described first, and then selection of the resource in accordance with a combination of the respective states will be described. The operation of selecting the optimum resource in accordance with the state of use/non-use of the resource will now be described in detail.

In the system controller 14, a resource definition table having the contents shown in Table 2, generated in accordance with "Resource Name", "Device Type" and "Name of Connected Video/Audio Storage Device" defined in the following Table 1, is stored. That is, the resource definition table has the resource name as the name of device, the device type indicating the type of device, and the name of video/audio storage device indicating a connected video/audio storage device, as elements.

**Table 1**

| Name of Item | Format |
|---|---|
| Resource Name | Character String |
| Device Type | Character String |
| Name of Connected Video/Audio Storage Device | Character String |

**Table 2**

| Resource Name | Device Type | Name of Connected Video/Audio Storage Device |
|---|---|---|
| IOP401 | Input/Output Processing Section | HDD35 |
| IOP402 | Input/Output Processing Section | HDD35 |
| IOP403 | Input/Output Processing Section | HDD35 |
| IOP411 | Input/Output Processing Section | HDD35 |
| IOP412 | Input/Output Processing Section | HDD45 |
| IOP413 | Input/Output Processing Section | HDD45 |
| HDD501 | Storage Device | HDD35 |
| HDD511 | Storage Device | HDD45 |

For example, the resource name "IOP401" indicates the input/output processing section 32 of Fig. 1 and it is indicated that this input/output processing section is connected to the HDD 35. The resource name "IOP411" indicates the input/output processing section 42 of Fig. 1 and it is indicated that this input/output processing section is connected to the HDD 45.

Also, in this system controller 14, a file management table having the contents shown in Table 4, generated in accordance with "File Name" and "Video/Audio Storage Device Housing the File" defined in the following Table 3, is stored. That is, the file management table has, as elements, the file name of video/audio data and the name of video/audio storage device indicating the video/audio storage device in which that file is recorded.

**Table 3**

| Name of Item | Format |
|---|---|
| File Name | Character String |
| Name of Video/Audio Storage Device Housing the File | Character String |

**Table 4**

| File Name | Name of Video/Audio Storage Device Housing the File |
|---|---|
| FILE1001 | HDD35 |
| FILE1002 | HDD35 |
| FILE1003 | HDD35 |
| FILE1004 | HDD35 |
| FILE1005 | HDD35 |
| FILE1006 | HDD45 |
| FILE1007 | HDD45 |
| FILE1008 | HDD45 |
| FILE1009 | HDD45 |
| FILE1010 | HDD45 |

For example, it is indicated that the file name "FILE1001" is recorded on the HDD 35 and that "FILE1006" is recorded on the HDD 45.

Moreover, in the system controller 14, there exist a resource management task for retrieving the resource name from the file name by using each table such as Table 2 and Table 4, and an execution management task for transmitting the request for use to the resource management task or transmitting a response from the resource management task to each device through the upper control terminals and the device controllers. Similarly to the system controller described with respect to the above-described priority of resource reservation or opening command, the system controller is constituted by the resource information management task and the execution management task, and the file management table and the resource definition table are stored in the resource management task.

It is now assumed, for example, that a request for use designating the AV data file FILE1001 is issued to the system controller 14 from one of the upper control terminals.

Then, the execution management task transmits the request command to the resource management task. The resource management task searches the file management table of Table 4 for the HDD 35 storing the AV data file FILE1001, and retrieves the name of the resource connected to the HDD 35 from the resource definition table of Table 2.

As a result, the system controller 14 determines the input/output processing sections of the resource names IOP401, IOP402, IOP403 and IOP404 as the candidate devices.

That is, in this device control apparatus, the operator can check available candidate devices, simply by designating a desired AV data file name instead of directly designating the device name from the upper control device.

In addition, the system controller 14 selects the optimum one device from the candidate devices in accordance with the state of use/non-use of each device by the upper control devices, priority at the time of use, reservation state and fault state of each device.

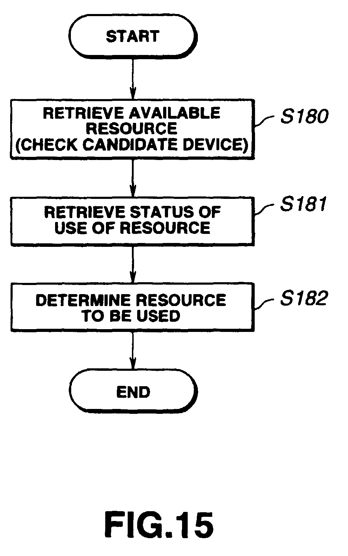

First, a specific example in which the optimum one resource is selected from the candidate devices in accordance with the state of use/non-use of each device will be described with reference to the flowchart of Fig.15.

The format of the opening request command from the upper control terminals 11, 12, 13 for the file FILE storing AV data is described as follows.
OPEN MD = 〈type of opening〉 PATH = 〈file name〉 PR = 〈priority of opening〉 (command 9)
This command is substantially similar to the foregoing command 8. While the resource name is directly designated by the command 8, the file name is designated by the command 9.

For example, it is assumed that a command for opening the AV data file FILE1001 by normal reproduction with the priority of 100 from the control device 11 through the LAN 15, that is,
OPEN MD = PLAY PATH = FILE1001 PR = 100
is sent to the system controller 14.

The system controller 14 retrieves the candidate devices with reference to the above-mentioned Table 2 and Table 4, as step S180.

Specifically, the system controller 14 retrieves the AV data file having the file name FILE1001 from the file management table of Table 4, and learns the name of the video/audio storage device (HDD 35) storing the FILE1001. Then, the system controller 14 retrieves the item of name of connected video/audio storage device from the resource definition table of Table 2 using the name of the storage device (HDD 35) as a retrieval key, and retrieves the video/audio input/output unit connected to the storage device (HDD 35) as the candidate device. In this case, too, the input/output sections having the resource names of IOP401, IOP402 and IOP403 become candidate devices.

In the system controller 14, a resource use management table in the structure of Fig. 1 having the contents shown in Table 6, generated in accordance with "Name of Resource in Use" and "Name of Upper Control Device Using the Resource" defined in the following Table 5, is also stored.

**Table 5**

| Name of Item | Format |
|---|---|
| Name of Resource in Use | Character String |
| Name of Upper Control Device Using the Resource | Character String |
| Priority of Opening | Positive Integer Value |

**Table 6**

| Resource in Use | Name of Upper Control Device Using the Resource | Priority of Opening |
|---|---|---|
| IOP401 | Upper Control Device 12 | 200 |
| IOP403 | Upper Control Device 13 | 100 |

In the above example, as a result of retrieval of the file name "FILE1001" from Table 4 and Table 2, the three input/output processing sections having the resource names of IOP401, IOP402 and IOP403 are retrieved (step S180 of Fig.5). Next, the system controller 14 retrieves the optimum one of the candidate devices, that is, the resource names IOP401, IOP402 and IOP403, by using the resource use management table of Table 6.

Specifically, as shown at step S181, the status of use of each resource is retrieved from the resource use management table of Table 6. In retrieval from the resource use management table, the name of each resource is used as a retrieval key. In this example, it is understood that the upper control device 12 is using IOP401 and that the upper control device 13 is using IOP403. IOP402, which is not described in the resource use management table, is in the state of non-use.

Therefore, the system controller 14 determines IOP402 as a resource to be used as shown at step S182, and registers IOP402 as new use information to the resource use management table as in Table 7.

**Table 7**

| Resource in Use | Name of Upper Control Device Using the Resource | Priority of Opening |
|---|---|---|
| IOP401 | Upper Control Device 12 | 200 |
| IOP402 | Upper Control Device 13 | 100 |
| IOP403 | Upper Control Device 11 | 100 |

Then, the system controller 14 causes the upper control device 11 to use IOP402 in accordance with the new use information registered to Table 7.

In this manner, the system controller 14 checks candidates for the necessary device in accordance with the file name designated by the request for use, and retrieves and allocates the unused device on the basis of the state of use/non-use of the device candidate at the present time point, thus enabling common use of the device by a plurality of upper control devices.

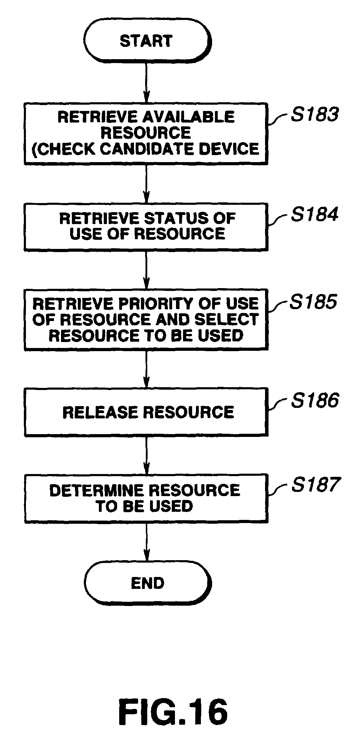

Next, a specific example in which the optimum one resource is selected from the candidate devices in accordance with the priority of use of each device will be described with reference to the flowchart of Fig. 16.

In this example, a request for use of the AV data file FILE1002 recorded on the HDD 35 is issued from the upper control device 12 with the priority of 100 in the AV data processing system 10 shown in Fig.1. The request for use is expressed as follows.
OPEN MD = PLAY PATH = FILE1002 PR = 100
The status of use of resource is expressed by a resource use management table as shown in the following Table 8.

**Table 8**

| Resource in Use | Name of Upper Control Device Using the Resource | Priority of Opening |
|---|---|---|
| IOP401 | Upper Control Device 12 | 50 |
| IOP402 | Upper Control Device 11 | 100 |
| IOP403 | Upper Control Device 13 | 200 |

First, at step S183, the system controller 14 retrieves a resource to be used for reproducing the AV data file FILE1002 from the file management table of Table 4 and the resource definition table of Table 2. From the file management table, it is understood that the AV data file FILE1002 is on the HDD 35. From the resource definition table, it is understood that the available input/output sections are IOP401, IOP402 and IOP403.

Then, at step S184, the system controller 14 retrieves the status of use of IOP401, IOP402 and IOP403 from the above-described Table 8. In retrieval from the resource use management table, the name of each resource is used as a retrieval key. In this example, it is understood that IOP401, IOP402 and IOP403 are in use and that there is no unused resource.

Thus, since no unused resource exists, the system controller 14, at step S185, retrieves the priority of use of each resource from the resource use management table of Table 8 and selects the resource having the lowest priority from the resources having a lower priority than the priority of use added to the received request for use. In this example, IOP403 having the priority of 200, which is lower than the requested priority of use of 100, is selected.

For example, if the priority of opening of IOP402 is 200 in Table 8, both of the resources IOP402 and IOP403 have the lowest priority and either one may be selected. In this case, however, the resource IOP402 on the top of the candidate resources entered to the table is selected.

Then, at step S186, the system controller 14 requests the upper control device 11 to release the resource IOP403 selected at step S185. Specifically, the request for release of the target resource is transmitted to the upper control device 11 through the execution management task. The upper control device 11, having received this request, transmits a CLOSE command to the system controller 14. Thus, the use of the target resource by the upper control terminal 11 is stopped and the use information of IOP403 is deleted from the resource use management table, as shown in the following Table 9.

**Table 9**

| Resource in Use | Name of Upper Control Device Using the Resource | Priority of Opening |
|---|---|---|
| IOP401 | Upper Control Device 12 | 50 |
| IOP402 | Upper Control Device 11 | 100 |

Then, as shown at step S187, the system controller 14 determines IOP403 as a resource to be used and registers IOP403 as new use information to the resource use management table, as shown in the following Table 10.

**Table 10**

| Resource in Use | Name of Upper Control Device Using the Resource | Priority of Opening |
|---|---|---|
| IOP401 | Upper Control Device 12 | 50 |
| IOP402 | Upper Control Device 11 | 100 |
| IOP403 | Upper Control Device 13 | 100 |

Then, the system controller 14 causes the upper control device 13 to use IOP403 in accordance with the new use information registered to Table 10.

In this manner, the system controller 14 checks candidates for the necessary device in accordance with the file name designated by the request for use, and selects the optimum device on the basis of the priority of use of the device candidate at the present time point. Therefore, by the request for use of a high priority, the request of a low priority can be interrupted and processing such as recording, reproduction, editing and inspection of high importance can be securely carried out.

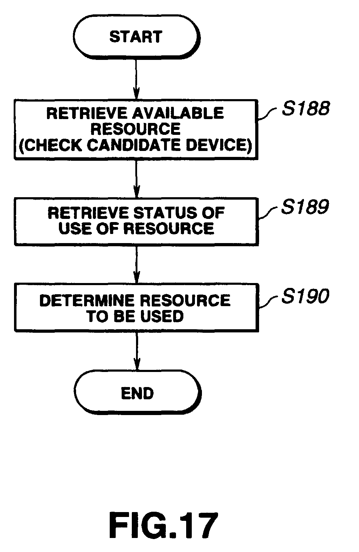

Next, a specific example in which the optimum one device is selected from the candidate devices in accordance with the status of reservation of each device will be described with reference to the flowchart of Fig. 17.

In the system controller 14, a resource reservation management table having the contents shown in Table 12, generated in accordance with "Reserved Resource Name" and "Name of Upper Control Device Reserving the Resource" defined as shown in the following Table 11, is stored.

**Table 11**

| Name of Item | Format |
|---|---|
| Reserved Resource Name | Character String |
| Name of Upper Control Device Reserving the Resource | Character String |

**Table 12**

| Reserved Resource Name | Name of Upper Control Device Reserving the Resource |
|---|---|
| IOP401 | Upper Control Terminal 13 |
| IOP403 | Upper Control Terminal 12 |

It is now assumed that a request for use of the AV data file FILE1003, expressed by
OPEN MD = PLAY PATH = FILE1003 PR = 100
is transmitted to the system controller 14 from the upper control device 13 in the broadcast transmission system 10 shown in Fig. 1.

The system controller 14, at step S188, retrieves a resource to be used for reproducing FILE1003 from the file management table of Table 4 and the resource definition table of Table 2. It is understood from the file management table that the file is on the HDD 35, and it is understood from the resource definition table that the available input/output sections are IOP401, IOP402 and IOP403.

Then, at step S189, the system controller 14 retrieves the status of reservation of each resource retrieved at step S188. In retrieval from the resource reservation management table of Table 12, the name of each resource is used as a retrieval key. In this example, the resource (input/output processing section 32) expressed by the resource name IOP401 is reserved by the upper control device 13, and the resource (input/output processing section 34) expressed by the resource name IOP403 is reserved by the upper control device 12. The resource (input/output processing section 33) expressed by the resource name IOP402, which is not described in the resource reservation management table, is unreserved.

Then, at step S190, the system controller 14 determines the resource to be used from the result of retrieval of step S189 and registers the resource to the resource use management table. As for the selection order, the resource reserved by the upper control device which is requesting the use (that is, the resource reserved by the reservation command "RESV" issued by the user himself/herself) is selected first, and the unreserved resource is selected next. The resource reserved by another upper control device cannot be used. Therefore, in this example, the resource name IOP401 is selected and registered as new use information to the resource use management table, as shown in the following Table 13.

**Table 13**

| Resource in Use | Name of Upper Control Device Using the Resource | Priority of Opening |
|---|---|---|
| IOP401 | Upper Control Device 13 | 100 |

Then, the system controller 14 causes the upper control device 13 to use the resource IOP401 (input/output processing section 32) in accordance with the new use information registered to the above-mentioned Table 13.

In this manner, the system controller 14 checks candidates for the necessary device in accordance with the file name designated by the request for use and selects the optimum device on the basis of the status of reservation of the device candidates at the present time point. Therefore, the reserved device is preferentially allocated and the device reserved by another upper control terminal is made unavailable. Thus, the use of the device can be guaranteed and efficient distribution of devices can be carried out.

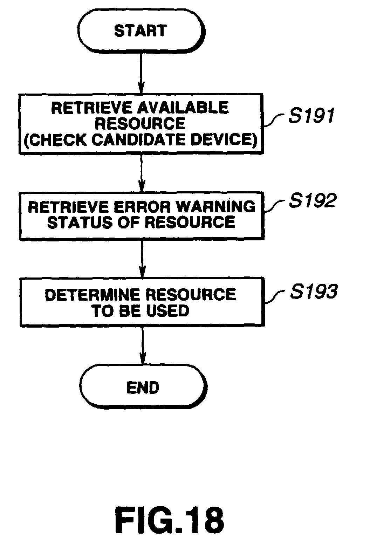

Next, a specific example in which the optimum one device is selected from the candidate devices in accordance with the fault state of each device will be described with reference to the flowchart of Fig. 18.

The fault state in this example includes an error state indicating that the device is in complete breakdown and a warning state indicating that the device is not in complete breakdown but is unstable.

In the system controller 14, a resource error/warning management table having the contents shown in Table 15, generated in accordance with "Resource Name", "Error/Warning Discrimination" and "Error/Warning Code" defined as shown the following Table 14, is stored.

**Table 14**

| Name of Item | Format |
|---|---|
| Resource Name in Error/Warning State | Character String |
| Error/Warning Discrimination | Character String |
| Error/Warning Code | Integer Value |

**Table 15**

| Resource Name in Error/Waning State | Error/Warning Discrimination | Error/Warning Code |
|---|---|---|
| IOP401 | Error | 0x0700FFF (non-connection error) |
| IOP401 | Warning | 0x070007E8 (IOP communication fault warning) |
| IOP403 | Error | 0x07000401 (IOP hard error) |

It is now assumed that a request for use of the AV data file FILE1004, expressed by
OPEN MD = PLAY PATH = FILE1004 PR = 100
is transmitted to the system controller 14 from the upper control device 11 in the broadcast transmission system 10 shown in Fig. 1.

The system controller 14, at step S191, retrieves a resource to be used for reproducing FILE1004 from the file management table of Table 4 and the resource definition table of Table 2. It is understood from the file management table that the file is on the HDD 35, and it is understood from the resource definition table that the available input/output sections are IOP401, IOP402 and IOP403.

Then, at step S192, the system controller 14 retrieves the error/warning status of each resource retrieved at step S191. In retrieval from the resource error/warning management table of Table 15, the name of each resource is used as a retrieval key. In this example, it is understood that IOP401 is in the state of 0x0700FFF (non-connection error) and 0x070007E8 (IOP communication fault warning), and that IOP403 is in the state of 0x07000401 (IOP hard error). IOP402, which is not described in the resource error/warning management table, is in the state of no error/warning.

Then, at step S193, the system controller 14 determines the resource to be used from the result of retrieval of step S192 and registers the resource to the resource use management table. As for the selection order, the resource having no error/warning is selected first, and the resource having only the warning is selected next. Therefore, in this example, the resource IOP402 is selected and registered as new use information to the resource use management table, as shown in the following Table 16.

**Table 16**

| Resource in Use | Name of Upper Control Device Using the Resource | Priority of Opening |
|---|---|---|
| IOP402 | Upper Control Device 11 | 100 |

Then, the system controller 14 causes the upper control device 11 to use the resource IOP402 in accordance with the new use information registered to the above-mentioned Table 16.

In this manner, the system controller 14 checks candidates for the necessary device in accordance with the file name designated by the request for use and selects the optimum device on the basis of the fault state of the device candidates at the present time point. Therefore, as selection is carried out in consideration of the fault state of the device, the overall availability of the system can be improved by lowering the allocation order of the device which is unstable in operation.

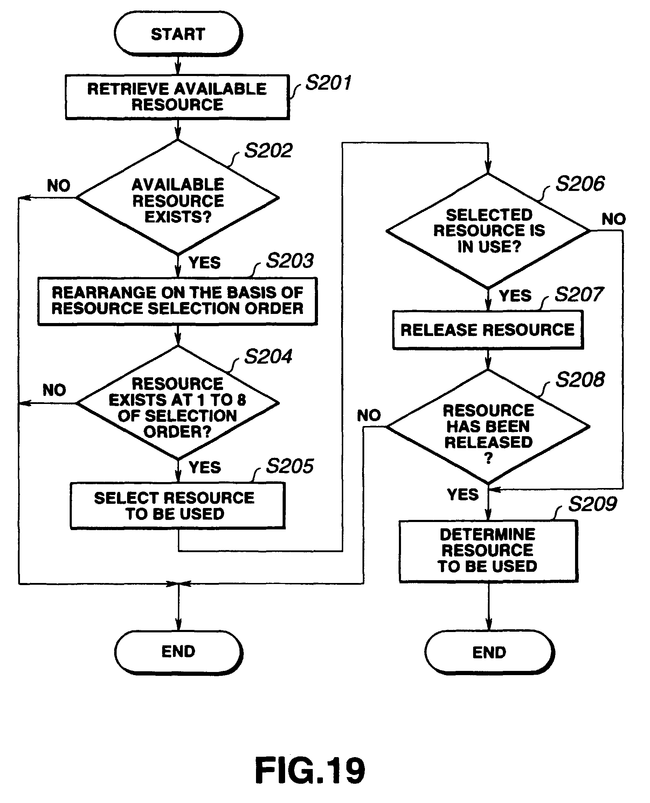

Next, selection of the device using a combination of the state of use/non-use of each device by the upper control device, priority at the time of use, reservation state, and fault state of each device as elements in selecting the optimum one device after checking each candidate device will be described with reference to the flowchart of Fig. 19.

In this example, a request for use of the AV data file FILE1005 expressed by
OPEN MD = PLAY PATH = FILE1005 PR = 100
is issued from the upper control device 11 in the broadcast transmission system 10, and the resource use management table, the resource reservation management table and the resource error/warning management table are in such states as shown in the following Tables 17, 18 and 19, respectively.

**Table 17**

| Resource in Use | Name of Upper Control Device Using the Resource | Priority of Opening |
|---|---|---|
| IOP401 | Upper Control Device 12 | 100 |

**Table 18**

| Reserved Resource Name | Name of Upper Control Device Reserving the Resource |
|---|---|
| IOP401 | Upper Control Terminal 13 |
| IOP403 | Upper Control Terminal 11 |

**Table 19**

| Resource Name in Error/Waning State | Error/Warning Discrimination | Error/Warning Code |
|---|---|---|
| IOP403 | Error | 0x07000401 (IOP hard error) |

First, at step S201, the system controller 14 retrieves a resource to be used for reproducing FILE1005 from the file management table of Table 4 and the resource definition table of Table 2. It is understood from the file management table that the file is on the HDD 35, and it is understood from the resource definition table that the available input/output sections are the input/output processing sections 32, 33 and 34 having the resource names of IOP401, IOP402 and IOP403, respectively, on discrimination at step S202. If there is no available resource at this point, the request for use ends in failure.

Then, at step S203, the system controller 14 rearranges IOP401, IOP402, IOP403 and IOP404 on the basis of definition of resource selection order shown in Tables 20-1, 20-2 and 20-3.

**Table 20-1**

| Selection Order | Status of Use | Status of Reservation | Error/Warning Status |
|---|---|---|---|
| 1. | Unused | Reserved by Device Itself | No Error/Warning |
| 2. | Unused | Unreserved | No Error/Warning |
| 3. | Unused | Reserved by Device Itself | Only Warning |
| 4. | Unused | Unreserved | Only Warning |
| 5. | In Use with Low Priority | Reserved by Device Itself | No Error/Warning |
| 6. | In Use with Low Priority | Unreserved | No Error/Warning |
| 7. | In Use with Low Priority | Reserved by Device Itself | Only Warning |
| 8. | In Use with Low Priority | Unreserved | Only Warning |
| 9. | In Use with High Priority | Reserved by Device Itself | No Error/Warning |
| 10. | In Use with High Priority | Unreserved | No Error/Warning |

**Table 20-2**

| Selection Order | Status of Use | Status of Reservation | Error/Warning Status |
|---|---|---|---|
| 11. | In Use with High Priority | Reserved by Device Itself | Only Warning |
| 12. | In Use with High Priority | Unreserved | Only Warning |
| 13. | Unused | Reserved by Another Device | No Error/Warning |
| 14. | Unused | Reserved by Another Device | Only Warning |
| 15. | In Use with Low Priority | Reserved by Another Device | No Error/Warning |
| 16. | In Use with Low Priority | Reserved by Another Device | Only Warning |
| 17. | In Use | Reserved by Another Device | No Error/Warning |
| 18. | In Use | Reserved by Another Device | Only Warning |
| 19. | Unused | Reserved by Device Itself | Error |
| 20. | Unused | Unreserved | Error |
| 21. | In Use with Low Priority | Reserved by Device Itself | Error |

**Table 20-3**

| Selection Order | Status of Use | Status of Reservation | Error/Warning Status |
|---|---|---|---|
| 22. | In Use with Low Priority | Unreserved | Error |
| 23. | In Use with High Priority | Reserved by Device Itself | Error |
| 24. | In Use with High Priority | Unreserved | Error |
| 25. | Unused | Reserved by Another Device | Error |
| 26. | In Use with Low Priority | Reserved by Another Device | Error |
| 27. | In Use with High Priority | Reserved by Another Device | Error |

In these Tables 20-1, 20-2 and 20-3, the description of "In Use with Low Priority" indicates that the resource is being used with a lower priority than the priority of the request for use. "In Use with High Priority" indicates that the resource is being used with a higher priority than the priority of the request for use. "Reserved by Device Itself" indicates that the upper control device itself which is requesting the use has reserved the resource. "Reserved by Another Device" indicates that a device except for the upper control device which is requesting the use has reserved the resource.

The rearrangement of the resource selection conditions in these Tables 20-1,20-2 and 20-3 is determined in the following order.
No Error > Reserved by Device Itself or Unreserved
> Unused or In Use with Low Priority > Unused > No Warning
> Reserved by Device Itself

The following Table 21 shows the resource selection order obtained by rearranging the retrieved resources on the basis of the definition of Tables 20-1, 20-2 and 20-3.

**Table 21**

| Selection Order | Resource Name | Status of Use | Status of Reservation | Error/Warning Status |
|---|---|---|---|---|
| 2. | IOP402 | Unused | Unreserved | |
| 11. | IOP401 | In Use with High Priority (priority = 100) | Reserved by Another Device | |
| 13. | IOP403 | Unused | Reserved by Device Itself | Error |

At step S204, the system controller 14 discriminates whether or not the resource exists within the range of selection order 1. to 8. shown in Table 20. In the definition of resource selection order shown in Table 20, the resources at the selection order 9. to 27. are unavailable resources, which are being used with a high priority or are reserved by another device or have an error. If there is no resource corresponding to the selection order 1. to 8., the use ends in failure. At this step S204, the system controller 14 discriminates IOP402 at the selection order 2. in the above-described Table 21.

Then, at step S205, the system controller 14 selects a resource to be used. The system controller 14 selects the resource at the uppermost place of the selection order 1. to 8., as the resource to be used. In the example of Table 21, for example, when IOP402 at the selection order 2. and IOP403 at the selection order 8. become selection targets, IOP402 at the selection order 2., which is the uppermost place, is selected as the resource to be used.

Then, at step S206, the system controller 14 discriminates whether the selected resource is in use or not. If it is discriminated that the selected resource is unused, the processing shifts to step S209 and this resource is determined as the resource to be used. That is, the selected resource is registered as new use information to the resource use management table.

Since the selected source IOP402 is unused, the system controller 14 determines NO at step S206 and goes to step S209, where the selected resource IOP402 is determined as the resource to be used and is registered as new information to the resource use management table, as shown in Table 22.

**Table 22**

| Resource in Use | Name of Upper Control Device Using the Resource | Priority of Opening |
|---|---|---|
| IOP402 | Upper Control Device 11 | 100 |

Then, the system controller 14 causes the upper control device 11 to use IOP402 in accordance with the new use information registered to Table 22.

If the selection order of IOP402 is not 2. but 8., only the resources at the selection order 8., 11. and 13. are found out as available resources at step S202, and the resource use management table is changed as shown in Table 23 in accordance with rearrangement of selection conditions at step S203.

**Table 23**

| Resource in Use | Name of Upper Control Device Using the Resource | Priority of Opening |
|---|---|---|
| IOP401 | Upper Control Device 12 | 100 |
| IOP402 | Upper Control Device 13 | 200 |

The resource selected in accordance with discrimination at step S204 is only the resource IOP402 at the selection order 8. This IOP402 is in use with a priority of 200 according to discrimination at step S206, and is being used with a priority lower than the priority of the request for use.

Then, at step S207, the system controller 14 requests release of the selected resource IOP402 by issuing a closing request to the upper control device which is using this IOP402 (in this case, the upper control device 13 according to Table 17). Then, the upper control device 13 issues a "CLOSE" command to the system controller 14, thereby interrupting the use and releasing IOP402 (input/output processing section 32).

The system controller 14 determines IOP402 as the resource to be used and registers this IOP402 as new use information to the resource use management table.

If it is discriminated at step S208 that the resource is not released, the request for use ends in failure.

As described above, in the broadcast transmission system 10 shown in Fig.1, the system controller 14 checks candidates for the necessary device in accordance with the file name designated by the request for use, and can dynamically select the device to be used in consideration of the state of use/non-use of each device by the upper control device, priority at the time of use, reservation state and fault state of each device. Therefore, the upper control device need not manage the state of each device and the structure can be simplified accordingly.

The upper control devices 11, 12 can handle the plurality of AV servers 30, 40 as if they were one large-capacity unit under the control of the system controller 14. Therefore, even when the recording area of the AV data file storage device is extended or even when a storage device is additionally provided, the change of the upper control device can be limited to the minimum level.

Also, in the broadcast transmission system 10, the operator can carry out the operation of request for use from each upper control device simply by designating the file without grasping the status of the device. Therefore, efficient distribution of the devices can be realized and the AV data files can be processed on the file basis.

The processing of the system controller 14 at the time when the upper control terminal issues the control command so as to carry out occupancy of the resource or the like is described above.

Next, how the system controller 14 controls the device main controller 17 or the like in response to such a control command will be described in detail.

First, the device ID is allocated to each resource, and the system controller 14 holds a device ID management table constituted by the device ID and the above-described resource name. The device ID will now be described in detail.

The device ID is the ID specifying a broadcasting device as a control target, that is, a resource, and has a value which is uniquely determined in accordance with position information of the equipment or the like.

The rule for determining the device ID will be described. The device ID has a value of four bytes which is obtained by combining four one-byte constituent elements as follows.
(1) ID of casing (e.g., "1")
(2) slot number (e.g., "5")
(3) I/F CPU number (e.g., "2")
(4) equipment number (e.g., "4")
In the example as described above, the device ID is normally expressed as "1.5.2.4".

The casing, which determines one of the constituent elements of the device ID, stores device controller boards having the above-described device main controller and device sub controller mounted thereon. The device controller board receives power supply from the casing and carries out communication with the other device controller boards by using the bus of the casing.

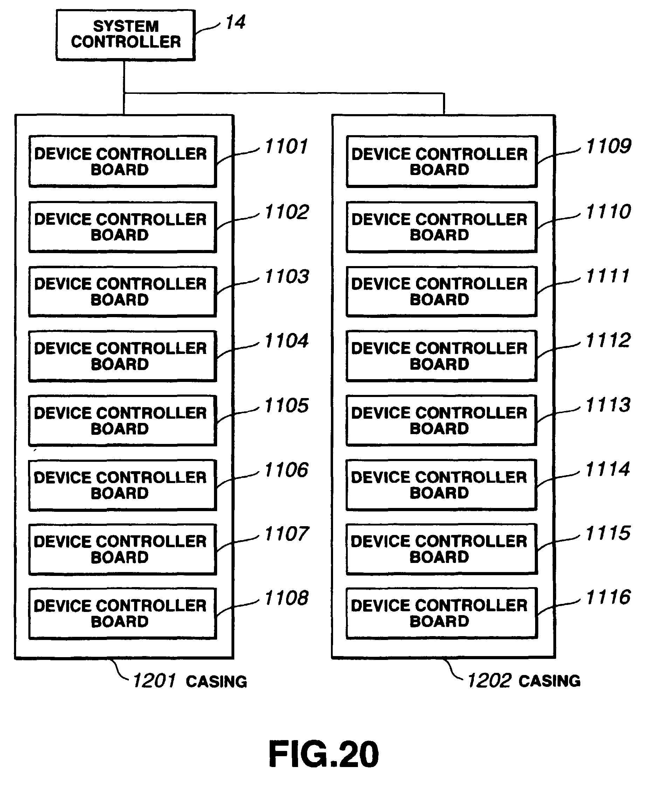

Next, a specific mode in which device controller boards are housed in the casing will be described with reference to Fig.20.

Each of casings 1201 and 1202 in Fig.20 has eight slots and a device controller board can be inserted into each slot. Thus, eight device controller boards at the maximum can be stored in one casing. In these casings 1201 and 1202, each device controller board can be added or deleted by insertion or extraction. In Fig.20, the two casings are cascaded and 16 device controller boards are inserted therein. The slot number is the number corresponding to each slot in the casing, and the slot number is allocated to each slot sequentially from the top.

For example, if the slot number of a slot in which a device controller board 1101 is inserted is "1", the slot number of the device controller board 1101 is "1" and the slot number of a device controller board 1105 is "5".

In the case where two casings are provided as shown in Fig.20, the casing ID "1" is allocated later to the casing 1201 and the casing ID "2" is allocated to the casing 1202.

As described above, the device sub controllers connected to the device main controller can be constituted by a necessary number of boards in accordance with the purpose. That is, though the number of device controller boards having the device main controller mounted thereon is fixedly one in the system because of its role, the device controller boards having the device sub controllers mounted thereon may be connected in accordance with the type and number of equipments connected below the device controller boards. Therefore, the number of device controller boards having the device sub controllers mounted thereon is variable.

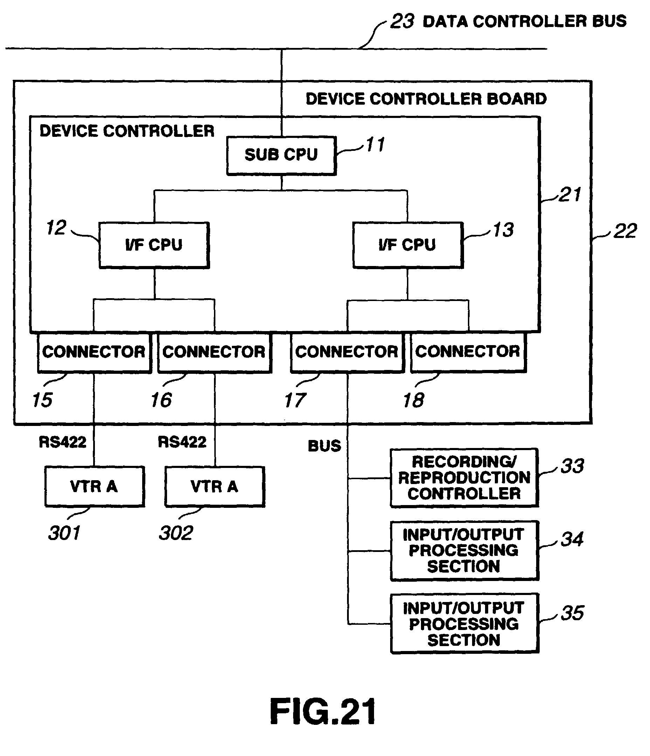

Next, the internal structure of the device controller board and connection with an external equipment will be described, and allocation of the equipment number and the I/F CPU number will be described with reference to Fig.21.

A device controller 21 is constituted by a sub CPU 11, I/F CPUs 12, 13, and connectors 15, 16, 17, 18, as shown in Fig.21. A device controller board 22 shown in Fig.21 represents a device sub controller. The device controller board 22 is connected with the upper device main controller 16 through a data controller bus 23 and is connected with the lower device through the connector. In the case of the main controller 16, the similar structure is used and the number of I/F CPUs and connectors differs. The connectors are connected with the device sub controllers 17, 18, and the sub CPU is connected with the system controller 14 through the data controller bus 23.

The lower devices shown in Fig.21 are a VTR A 301, a VTR B 302, a recording/reproduction controller 31, and input/output processing sections 32, 33.

The VTR A 301 is connected to the connector 15 through RS-422 and the VTR B 302 is connected to the connector 16 through RS-422. The recording/reproduction controller 31 and the input/output processing sections 32, 33 are connected to the connector 17 through a bus.

In this case, the equipment number corresponds to the connector. The VTR A 301 connected to the connector 15 on the left side has the equipment number of 1, and the VTR B 302 connected to the connector 16 on the right side has the equipment number of 2. The connection system is not limited to RS-422, and other connection methods may be used as long as it is one-to-one connection.

The recording/reproduction controller 31 and the input/output processing sections 32, 33 are cascaded to the connector 17 in the bus form. In the case of bus connection, only one connector is effective under one I/F CPU. In short, the unique ID on the bus can be directly used as the "equipment ID". In this example, SDC C 33 corresponds to"22", ENC D 34 corresponds to "24", and DEC E 35 corresponds to "26".

For example, with respect to the device controller board 22 inserted in the fifth slot 22 of the first casing 1201, each equipment connected to the device controller 21 has the following device ID.
VTR A -> 1.5.1.1
VTR B -> 1.5.1.2
recording/reproduction controller 31 -> 1.5.2.22
input/output processing section 32 -> 1.5.2.24
input/output processing section 33 -> 1.5.2.26

Since the device IDs conforming to such a rule include physical information, these IDs will never be coincident with one another. The system controller can use the device ID as the physical ID of the control target equipment.

Meanwhile, the system controller 14 controls all the targets of operation as resources, as described above. As in the foregoing embodiment, the resource name is given to each of all the broadcasting devices and the upper control terminal gives the system controller a notification of control of the target device by designating the resource name.

The system controller holds the device ID management table in which the resource name corresponds to the device ID given to each device. For example, this device ID management table can be expressed as in the following Table 24.

**Table 24**

| Resource Name | Device ID |
|---|---|
| VTR_A | 1.5.1.1 |
| VTR_B | 1.5.1.2 |
| SDC_C | 1.5.2.22 |
| ENC_D | 1.5.2.24 |
| DEC_E | 1.5.2.26 |

How the system controller 14 having the device ID management table of Table 24 carries out operation on the basis of the control command from the upper control terminal 11 will now be described in detail.

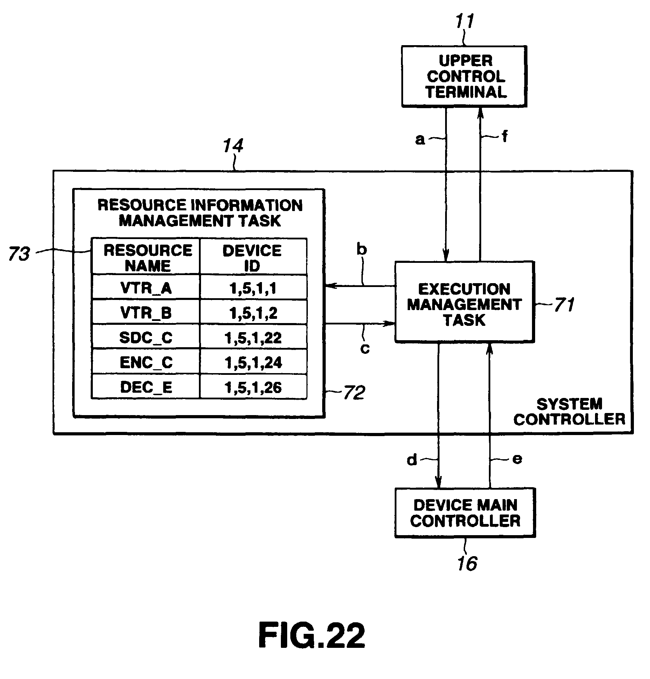

Similarly to the foregoing embodiment, the system controller 14 is constituted by the execution management task 71 and the resource management task 72, as shown in Fig.22. The upper control terminal 11 and the device main controller 16 are connected to the system controller 14.

The device ID management table as shown in Table 24 is registered to the resource information database 73 (Fig.2) of the resource information management task 72.

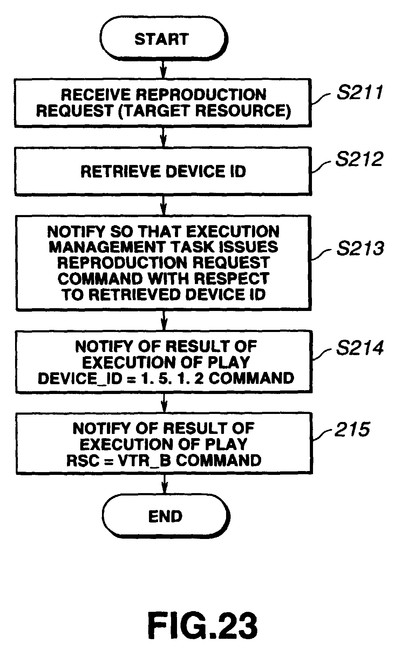

First, the upper control terminal 11 issues a command indicating reproduction of the resource VTR_B,
PLAY RSC = VTR_B
to the system controller 14, as indicated by "a" in Fig.22. To simplify the description, it is assumed that this target resource is already available to the upper control terminal 11 (that is, the device for which an opening command is issued and for which the "successful" result of execution is transmitted from the system controller 14). The execution management task 71, having received this reproduction control command, issues a reproduction request (6) for the target resource to the resource information management task 72. The resource information management task 72, having received this reproduction request (6), carries out a series of processing shown in Fig.23. Specifically, when the reproduction request is received at step S211, the device ID is retrieved by using the resource name of VTR_B as a key, at step S212. That is, the resource information management task 72 retrieves the device ID by using the device management ID table and by using the target resource name added to the reproduction request as the key. In this example, since the target resource name is VTR_B, the device ID "1.5.1.2" is retrieved.

Then, the processing shifts to step S213 and the execution management task 71 is notified so as to issue a reproduction request command with respect to the device of the retrieved device ID ("c" in Fig.22). The retrieved device ID information is added to this notification. The execution management task, having received this notification, issues the reproduction request command to the equipment having the device ID of 1.5.1.2. That is, a command of
PLAY DEVICE_ID = 1.5.1.2 (command)
is issued from the execution management task 71 to the device main controller 16, as indicated by an arrow "d" in Fig.22. Then, the result of execution of the command issued by the execution management task 71 is issued from the device main controller 16, as indicated by an arrow "e".

At step S215, the result of execution of the command of step S211 is issued from the execution management task 71 to the upper control terminal 11, as indicated by an arrow "f". Then, the series of processes with respect to the reproduction request end.

As described above, the resource name and the device ID normally have the one-to-one relation. However, there are exceptional equipments that cannot be designated only by the device ID. Such equipments are "equipments that are not directly controlled by the device controller" and "objects having no entity".

The equipments that are not directly controlled by the device controller, that is, by the device sub controller, are exemplified by the HDDs 34, 35. Since the recording/reproduction controllers 31, 41 and the input/output processing sections 32, 33, 34, 42, 43, 44 of the AV servers 30, 40 in the broadcast transmission system 10 shown in Fig. 1 can be allocated, that is, controlled in accordance with the device ID, it is not possible to further allocate the device ID to the HDDs 34, 35 connected the input/output processing sections 32, 33, 34, 42, 43, 44. In short, in the case where the HDD 35 is made up of RAID including plural HDDs, the device sub controller 17 cannot specify the HDD from among the plural HDDs and cannot issue the control command to the designated HDD.

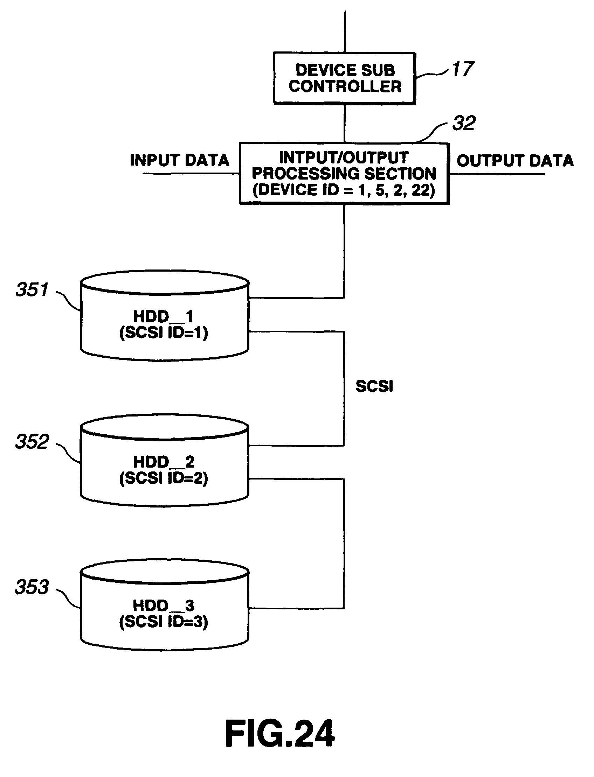

The drive ID will now be described with reference to Fig.24. As described above, the HDDs 35, 45 in the broadcast transmission system of Fig.2 are actually RAIDs constituted by a plurality of HDDs. To simplify the description, it is now assumed that the RAID, that is, the HDD 35 of Fig.2 is constituted by three HDDs 351, 352, 353.

As shown in Fig.24, the input/output processing section 32 is connected with the three HDDs 351, 352, 353 through a SCSI, and is connected with the device sub controller 17 through a control bus.

In Fig.24, through the SCSI, the HDD_1 351 is connected to the input/output processing section 32, the HDD_2 352 is connected to the HDD_1 351, and the HDD_3 is connected to the HDD_2 352. The input/output processing section 32 processes data inputted through the router 51 and records the processed data onto the HDDs 351, 352, 353. Also, the input/output processing section 32 reads out the data from the HDDs 351, 352, 353 in accordance with a control command from the upper control terminal, then carries out appropriate processing, and outputs the processed data as external data. As the standard for the transmission format of input data, the so-called SDI (serial digital interface) system standardized in accordance with SMPTE (Society of Motion and Television Engineerings)- 295M or SDTI (serial data transfer interface: SMPTE-305E) which is partly common with SDI is employed.

The HDD_1 351, HDD_2 352 and HDD_3 353 are controlled by the same input/output processing section 32 and uniquely identified in accordance with the SCSI ID as identification information.

Specifically, the SCSI ID is applied as the drive ID. Thus, by expressing the HDD_1 351 as "an HDD expressed by the drive ID = 1 under the control of the SDC 501 of the device ID = 1.5.1.22", the HDD_1 351 can be identified from the other HDDs. Similar identification processing may be carried out with respect to the other HDDs. The resource name, device ID and drive ID with respect to the HDD_1 351, HDD_2 352 and HDD_3 353 are shown in the following Table 25.

**Table 25**

| Resource Name | Device ID | Drive ID |
|---|---|---|
| HDD_1 | 1.5.2.22 | 1 |
| HDD_2 | 1.5.2.22 | 2 |
| HDD_3 | 1.5.2.22 | 3 |

With respect to objects having no entity, the system controller enables control from the upper control device similarly to the other equipments by using the identification ID for each object.

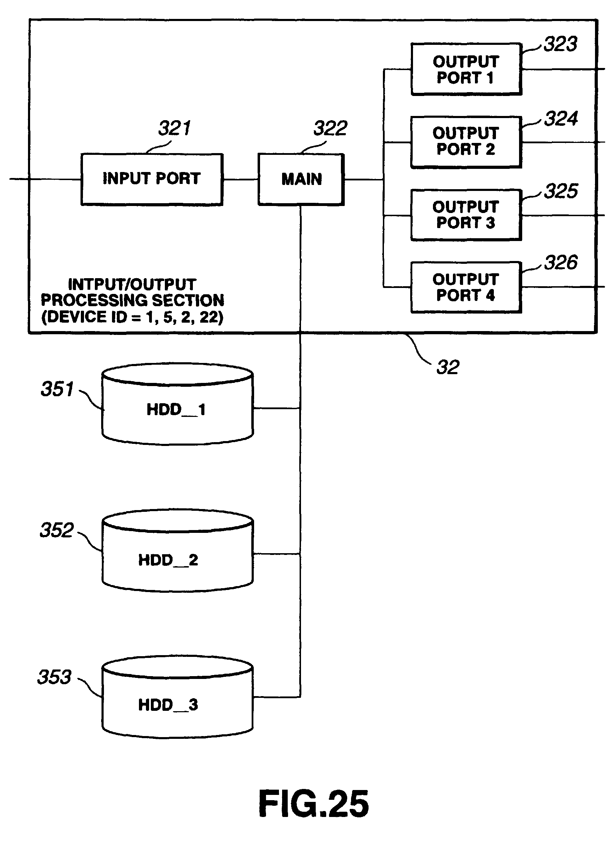

For example, the input/output processing section 32 is constituted by an input port 321 and output ports 323, 324, 325, 326, as shown in Fig.25. In this case, the port is one unit for processing data. The input port processes input data and transmits the processed data to the HDDs 351, 352, 353. The data outputted from the HDDs 351, 352, 353 are processed by the output ports 323, 324, 325, 326 and then outputted to the outside.

That is, when the data is outputted from the input/output processing section 32, the output of the data can be secured by designating the output port for input/output processing. However, since the identification ID is not allocated to the output ports 323, 324, 325, 326 of the input/output processing section 32, the device sub controller 17 cannot notify the output ports 323, 324, 325, 326 of the control command from the upper control device. Thus, this broadcast transmission system 10 newly introduces. a concept of port ID. If the port ID is allocated to each port to correspond to the resource name indicating each port, the upper control devices 11, 12, 13 can designate one port only by using a command of, for example,
PLAY RSC = PORT_1
and can give an instruction to reproduce the data from the designated port.

This will be described further with reference to Fig.25. The input/output processing section 32 is constituted by a main section 322, the input port 321 connected to the main section 322, the first output port 323, the second output port 324, the third output port 325 and the fourth output port 326. The HDD_1 351, HDD_2 352 and HDD_3 353 are connected to the main section 322 in parallel.

In the input/output processing section 32 thus constituted, the identification number of each port which is brought into the board for the input/output processing section 32 to process the data is directly used as the port ID allocated to each port.

In this case, however, since two ports of number one exist, that is, for input and output, in the same input/output processing section 32, information of direction with respect to input/output is prepared in addition to the port ID.

By associating the port ID, direction and device ID as information of a resource, the port having no entity can be controlled by the upper control terminals 11, 12, 13.

The input/output processing section 32 constituted as shown in Fig.25 realizes the resource-like use of the port, as the system controller 14 holds the following table.

**Table 26**

| Resource Name | Device ID | Direction | Port ID |
|---|---|---|---|
| PORT1 | 1.5.2.22 | IN | 1 |
| PORT2 | 1.5.2.22 | OUT | 1 |
| PORT3 | 1.5.2.22 | OUT | 2 |
| PORT4 | 1.5.2.22 | OUT | 3 |
| PORT5 | 1.5.2.22 | OUT | 4 |

In Table 26, the input port 321 of Fig.25 has a resource name "PORT1". Since the input port 321 is inside the input/output processing section 32, the device ID of the input port 321 is "1.5.2.22". Since the input port 321 is an input port, the direction thereof is "IN". The port ID can be expressed by "1". In Table 26, a port having a resource name 'PORT5" indicate the output port 326 of Fig.25. The resource-like use of each HDD 35 or 45 and each input/output port is described above. Next, resource-like use of input channels CH_IN_1 to CH_IN_5 supplied by the material supply sections 21, 22, 23, 24, 25 and output channels CH_OUT_1 to CH_OUT_5 supplied by the transmission sections 61, 62, 63, 64, 65 as shown in Fig.1 will be described.

In this case, the channel may be considered to be "a line through which data passes" or may be considered to be "something connected to the line". The channel is different from ordinary equipments controlled by the device sub controllers 17, 18, 19.

The channel is a resource which does not have the device ID as shown in the foregoing resource table, that is, a resource which is not directly controlled by the device sub controllers. Therefore, the channel cannot be identified in accordance with the device ID, drive ID or port ID as shown in the foregoing resource table.

In other words, since the channel is not directly controlled by the device sub controllers 17, 18, 19, the data such as device ID are not necessary. Thus, the concept of resource type indicating the type of resource, described with respect to the control command issued by the upper control terminals, is used. The resource type indicates the type of resource such as VTR, port, channel or the like. The system controller can perform appropriate processing on the resource by checking the resource type.

An exemplary table in which the resource type is introduced is shown in the following Tables 27-1 and 27-2.

**Table 27-1**

| Resource Name | Resource Type | Device ID | Drive ID | Direction | Port |
|---|---|---|---|---|---|
| VTR_A | VTR | 1.5.1.1 | | | |
| VTR_B | VTR | 1.5.1.2 | | | |
| SDC_C | SDC | 1.5.2.22 | | | |
| ENC_D | ENCODER | 1.5.2.24 | | | |
| DEC_E | DECODER | 1.5.2.26 | | | |
| HDD_1 | RAID | 1.5.2.22 | 1 | | |
| HDD_2 | RAID | 1.5.2.22 | 2 | | |
| HDD_3 | RAID | 1.5.2.22 | 3 | | |

**Table 27-2**

| Resource Name | Resource Type | Device ID | Drive ID | Direction | Port |
|---|---|---|---|---|---|
| PORT_1 | IOP | 1.5.2.22 | | IN | 1 |
| PORT_2 | IOP | 1.5.2.22 | | OUT | 1 |
| PORT_3 | IOP | 1.5.2.22 | | OUT | 2 |
| PORT_4 | IOP | 1.5.2.22 | | OUT | 3 |
| PORT_5 | IOP | 1.5.2.22 | | OUT | 4 |
| IN_1 | CHANNEL | | | | |
| IN_2 | CHANNEL | | | | |
| IN_3 | CHANNEL | | | | |
| IN_4 | CHANNEL | | | | |
| IN_5 | CHANNEL | | | | |
| OUT_1 | CHANNEL | | | | |
| OUT_2 | CHANNEL | | | | |
| OUT_3 | CHANNEL | | | | |
| OUT_4 | CHANNEL | | | | |
| OUT_5 | CHANNEL | | | | |

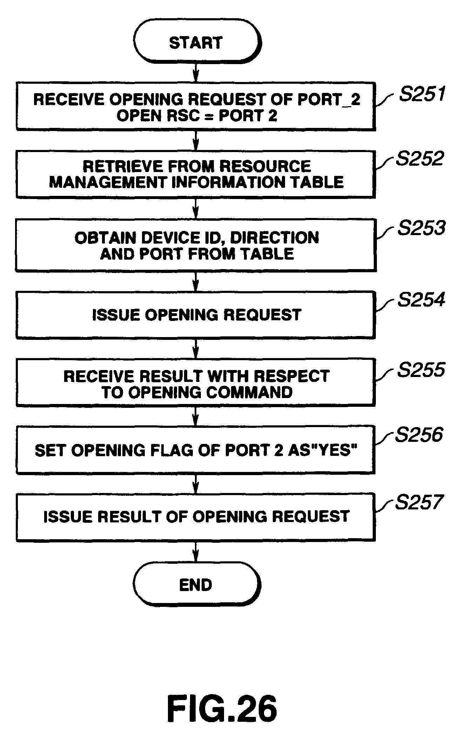

The control performed by the system controller 14 and the device controller 16 using Tables 27-1 and 27-2 will now be described with reference to the flowchart of Fig.26. Fig.26 shows a series of processing in the case where the system controller 14 has received the opening command to the output port 323 of the input/output processing section 32 from the upper control terminal. The system controller 14 has the same structure as that of Figs.2 and 4, and is constituted by the execution management task 71 and the resource information management task 72.

The execution management task 71, having received an OPEN command of
OPEN RSC = PORT_2 (command 10)
with respect to the output port 323 as a resource from the upper control terminals 11, 12, 13, issues a resource opening request to the resource information management task 72. The resource name of the command 9 is added to the source opening request. The resource information management task 72, having received the resource opening request (step S251), retrieves the corresponding resource from a resource management information table shown in Table 27 by using the resource name added to the resource opening command as a key. More specifically, the device ID, direction and port are retrieved from the resource management information table, thus obtaining the device ID "1.5.2.22", direction "OUT" and port ID "1" corresponding to the resource name of PORT_2 (step S253).

Then, the processing shifts to step S254 and the resource information management task 72 issues an opening request to the execution management task 71 so that the execution management task 71 causes the device main controller 16 to issue an opening command corresponding to the OPEN command. The information of device ID "1.5.2.22", direction "OUT" and port ID "1" is added to this opening request. The execution management task 71, having received the opening request, issues the opening command having this information added thereto to the device main controller 16. Since the device ID, direction and port ID are added to the opening command, the opening command can be directly issued to the device main controller 16 through the device sub controller 17.

The processing then shifts to step S255. The execution management task 71 receives the result with respect to the issued opening command from the device main controller 16, and issues the result to the resource information management task 72. The result is simply transmitted. Then, the processing shifts to step S256.

At step S256, if the result of "success" based on the result of the opening command is received, the open flag of the port 2 is set to "YES". That is, as described with reference to Fig. 10, the entry of the successful resource is added to the opening management information.

The processing then shifts to step S257 and the resource information management task 72 sends the result of the opening request for the port 2 to the execution management task 71. The execution management task 71, having received the result with respect to the opening request, issues the OPEN command and transmits the result with respect to the OPEN command to the upper control devices. Then, the series of processing with respect to the OPEN command ends.

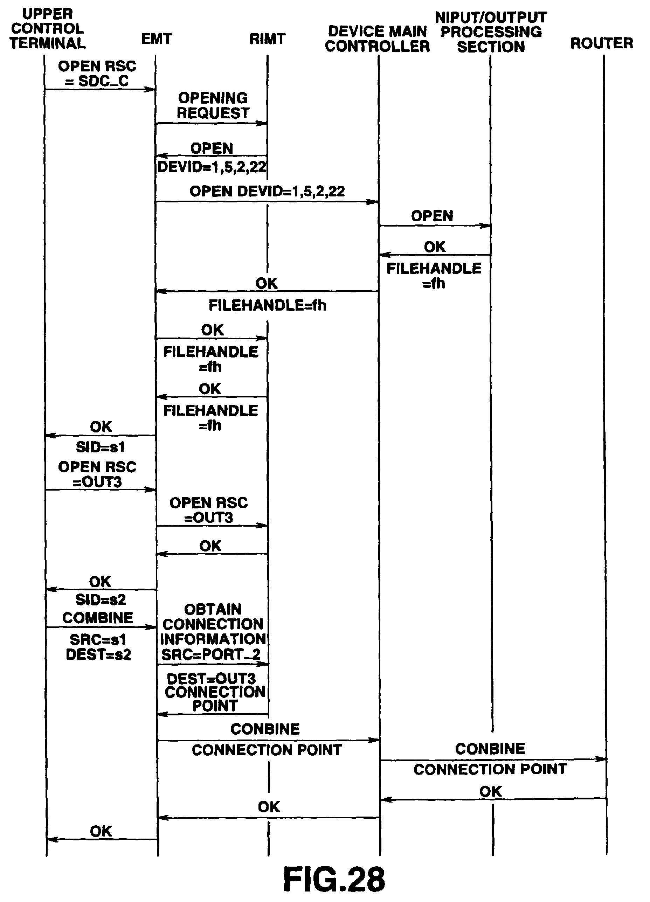

As described above, since the device ID, direction and port are correspondingly added to the resource name in the resource management information table (Fig.28), the control command is issued with respect to the lower device and each port. Since the drive ID is similarly added to the resource management information table, the upper control device issues the control command to each HDD connected to the input/output processing section. The processing thereof is substantially similar to the above-described series of processing with respect to the port and therefore will not be described further in detail.

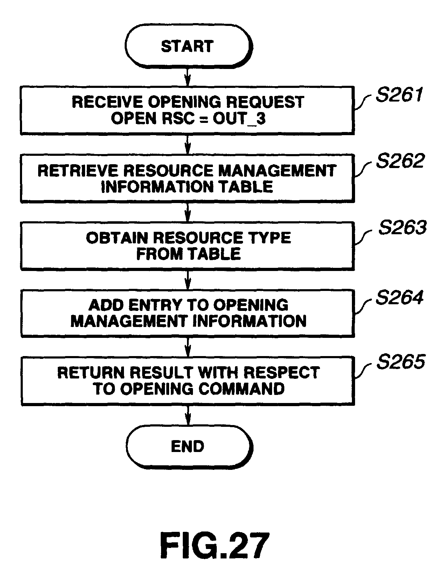

Next, a series of processing of an OPEN command with respect to the channel will be described with reference to Fig.27. Similarly to the processing of Fig.26, the system controller 14 is constituted by the execution management task 71 and the resource information management task 72.

The upper control device issues the following OPEN command with respect to the channel.
OPEN RSC = OUT_3 (command 11)
This command is an OPEN command with respect to the output channel CH_OUT_3 having the resource name "OUT_3" and inputted to the transmission section 63.

The execution management task 71, having received the OPEN command which is expressed by the command 11, issues an opening request to the resource information management task 72. The resource indicating the channel is added to this opening request.

Having received this opening request (step S261), the resource information management task 72 retrieves the corresponding sources with reference to the resource management information table (Fig.28) by using this resource as a key. In the case of the command 11, the resource name "OUT_3" and the resource type "CHANNEL" are retrieved (step S263). In this example, only the resource name "CHANNEL" is retrieved. That is, this resource type "CHANNEL" is not a target directly controlled by the device controllers 16, 17. Therefore, the control command is not directly issued with respect to the resource having the resource name "OUT_3".

The resource management information task 72 adds entry to the opening management information with respect to the opening target resource shown in Fig. 10, if successful (step S264). The control command is not issued to the device controller 16.

The processing then shifts to step S265 and the result with respect to the opening request is issued to the execution management task 71. The execution management task 71 reports the result to the upper control device which has issued the opening command.

As described above, the upper control terminal gives the opening command with respect to the channel and secures one of the channels CH_OUT_1 to CH_OUT_5 outputted from the router 51 for securing a desired channel. Also, the upper control terminal secures the output port of the input/output processing section 32 of the AV server 30 and connects these secured output port and channel. The upper control terminal then outputs the material from the secured output port, that is, from the output channel CH_OUT_3. In short, the upper control devices 11, 12, 13 control the channels inputted to or outputted from the broadcast transmission system 10 including the ports of the lower devices, as these channels are connected thereto.

Since the system controller 14 thus can use the channel as a resource, the route can be secured. This route control will be described in detail with reference to the sequential view of Fig.28.

Specifically, this sequence is started, for example, when the upper control device 11 sends "OPEN RSC = PORT_2 as a command for instructing opening of the equipment having the resource name PORT_2" to the system controller 14.

The execution management task (EMT) 71, having received the opening command, sends an opening request having the resource name added thereto to the resource information management task (RIMT) 72. The RIMT sends the opening request to which the device ID corresponding to the resource name is added, obtained by retrieval from the resource management information table. Then, the EMT sends "OPEN DEV ID = 1.5.2.22" to the device main controller 16 on the basis of the opening request received from the RIMT, and the device main controller 16 sends "OPEN" to the input/output processing section 32 as the control target equipment.

Then, the input/output processing section 32 issues the result of the opening command and "OK FILEHANDLE = fh", which is information about file handle, to the device main controller 16. The device main controller 16 similarly sends "OK FILEHANDLE = fh" to the EMT. The EMT similarly sends "OK FILEHANDLE = fh" to the RIMT. The RIMT adds entry of opening resource information about PORT_2 to the opening management information table (Fig. 10) and sends "OK FILEHANDLE = fh" to the EMT. The EMT sends the result of the command and "OK SID = s1", which is information of stream ID, to the upper control terminal 11 which has issued the opening command. The file handle is identification information for identifying files. The stream ID enables simplification of the command issued by the upper control terminal, as will be later described in detail.

In the above description, the command or the like is directly sent between the device main controller and the device such as the SDC. Practically, however, the device sub controller exists between the device main controller and the device, though not shown for simplifying the description. This point is similarly applied to the following description.

In accordance with this sequence, PORT_2 is opened in accordance with a command issued by the upper control terminal, and "s1" as the stream ID corresponding to the opened PORT_2 is provided to the upper control terminal.

Subsequently, the upper control terminal sends "OPEN RSC = OUT_3" as a command for opening the third output port OUT3 to the EMT, and the EMT sends an opening request having the resource name "OUT_3" added thereto to the RIMT. The RIMT carries out retrieval from the resource management information table, and if successfully done, notifies the EMT of the result "OK". Then, the EMT sends the result of the command and "OK SID = s2", which is information of stream ID, to the upper control terminal.

In accordance with this sequence, OUT3 is opened in accordance with the command issued by the upper control terminal, and "s2" as the stream ID corresponding to the opened OUT3 is provided to the upper control terminal 11.

On the basis of the stream IDs "s1" and "s2" provided to the upper control terminal 11, the upper control terminal 11 issues a command of
CMB SRC = s1 DEST = s2 (command 12)
to the system controller 14 so as to connect the output port "PORT_2" to the output channel "OUT_2". That is, a command for connecting the resources by designating the resource of the stream ID "s1" as the source and designating the resource of the stream ID "s2" as the destination is sent.

The EMT, having received the "COMBINE" command, retrieves the resource name of the source and the resource name of the destination in accordance with the stream ID so as to obtain connection information, and issues a notification having both resource names as additional information to the RIMT. The EMT can hold a database based on a stream management table and retrieve the target resource name from the stream management table by using the stream ID as a key, thus transmitting the information to the RIMT. This stream ID management table will be later described.

The RIMT retrieves the target resource in accordance with the resource name and transmits the information about it to the EMT. The EMT, having received the information, issues a control command through the device controllers 16, 17. Actually, the EMT issues the control command to PORT_2 (and the router 51). Each resource sends the result of "OK" to the upper control device.

In the foregoing series of sequences, the output port 323 of the input/output processing section 32 and the output channel CH_OUT_3 are separately opened to generate the streams s1 and s2. Then, these streams s1 and s2 are connected, thereby connecting the resource output port 323 with the output channel CH_OUT_3.

As described above, since the upper control devices 11, 12, 13 issue the opening command designating the input/output channels, the system controller 14 can control the target channel so as to secure the target channel and can control the secured target channel and the resource to be connected with each other in accordance with the "COMBINE" command.

Application of a so-called pipe to this broadcast transmission system will now be described.

The pipe can be considered to be a special kind of channel having attributes of both input and output, whereas an ordinary channel has attributes of either input or output of data. The pipe is used mainly for connecting a plurality of routers.

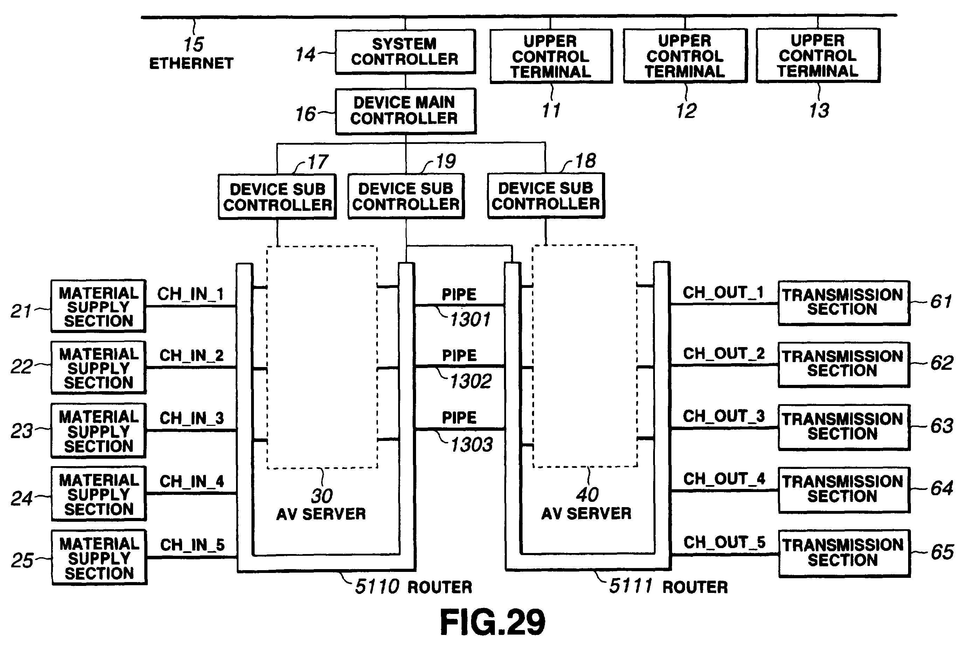

The broadcast transmission system 10 shown in Fig. 29 has two routers 5110 and 5111. The router 5110 is connected with five input channels (CH_IN_1 to CH_IN_5) and the AV server 30, and is controlled by the device sub controller 19. The router 5111 is connected with the AV server 40 and five output channels (CH_OUT_1 to CH_OUT_5), and is controlled by the device sub controller 19. The routers 5110 and 5111 are connected with each other by three pipes 1301, 1302 and 1303, and are controlled by the same device sub controller 19. Therefore, these routers operate apparently as if they are a single router.

The AV server 30 connected to the router 5110 is controlled by the device sub controller 17, and the AV server 40 connected to the router 5111 is controlled by the device sub controller 18. Other parts of the structure are the same as those of the broadcast transmission system 10 of Fig. 1. Therefore, those parts are denoted by the same numerals and will not be described further in detail.

The above-described device main controller has a timer as a virtual object mounted inside thereof. This timer is responsible for real-time control in the system. The device main controller realizes real-time control of various equipments by utilizing this timer.

The system controller also releases the timer object as a resource to the upper control terminal. The upper control terminal can set or inquire the time of the system by using the timer resource.

Moreover, the system controller and the device main controller can be controlled as resources. Commands to these control sections are issued by using these resource names. The stream generally means an input/output system in which a plurality of modules are arranged and connected by bidirectional paths for character data transfer between a standard device driver for controlling the device at a command level and a user process.

In this system 10, ID referred to as stream ID is prepared for a control command issued by the upper control devices 11, 12, 13, for example, the opening command, and this stream ID is given to the upper control terminals 11, 12, 13. After that, the upper control devices 11, 12, 13 issue a control command based on this stream ID. Thus, the control command authentication operation is much simplified.

The stream is applied not only to physical devices such as the AV server 30 but also to logical entities such as the input/output channels, which are not physical devices.

Next, how the system controller 14 prepares the stream ID for the above-described stream and how the system controller 14 carries out processing in accordance with a control command based on the stream ID will be described in detail.

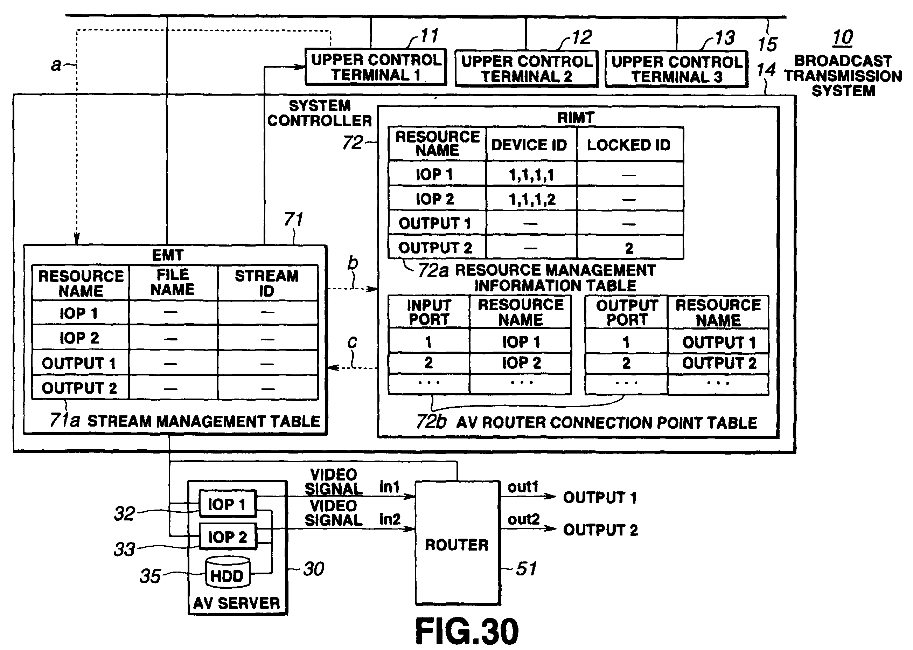

As shown in Fig.30, this broadcast transmission system 10 is constituted by upper control terminals 11, 12, 13, a system controller 14, an AV server 30, and a router 51, similarly to the system of Fig. 1. To simplify the description, device controllers 16, 17 and lower devices are not shown, unlike Fig.1.

The AV server 30 has an input/output processing section 32 (IOP1), an input/output processing section 33 (IOP2) and a HDD 35. In the AV server 30, the input/output processing sections 32, 33 are connected to the system controller 14, and the HDD 35 is connected to the input/output processing sections 32, 33,

The router 51 receives image signals as inputs in 1 and in 2 from the input/output processing section 32 (IOP1) and the input/output processing section 33(IOP2) of the AV server 30. From the router 51, output channels OUTPUT1 and OUTPUT2 are outputted from out1 and out2. The routes between these inputs and outputs are switched under the control of the system controller 14.

The output channels OUTPUT1, OUTPUT2 are connected to units which are not controlled by the system controller 14. For example, the output channels OUTPUT1, OUTPUT2 are connected to master switchers.

The system controller 14 is similar to the system controller of Fig.4, and is constituted by the execution management task 71 and the resource information management task (RIMT) 72. The EMT 71 has a stream management table 71a holding information of streams.

The EMT 71 changes the state of the stream management table 71a in accordance with control commands such as "OPEN" and "RESV" commands from the upper control terminals 11, 12, 13. Also, the EMT 71 generates a control command to the AV server 30, then issues the control command to the AV server 30, and notifies the upper control terminals 11, 12, 13 of the result.

The stream management table 71a is a table for registering a set of resource name, file name attached to AV data and stream ID for identifying the stream to the EMT 71 of the system controller 14 in advance, for each resource from which AV data can be reproduced.

In an initial state, the file name and stream ID are unregistered. The unregistered state is expressed as "-" in Fig.30 and the subsequent drawings. In this case, since the resource from which AV data can be reproduced is the input/output processing section 32 (IOP1) and the input/output processing section 33 (IOP2), these two sections are registered as resource names.

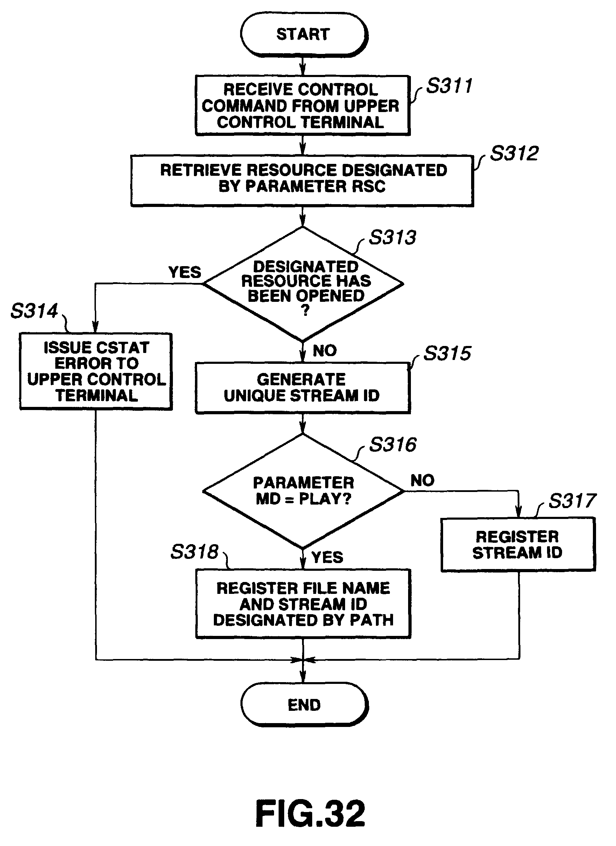

Next, how the stream ID is prepared by the system controller 14 will be described with reference to Fig.30 and the flowchart of Fig.32.

In this case, the flow of control for outputting an AV data file 1 recorded on the HDD 35 of the AV server 30 as AV signals by the input/output processing section 32 in accordance with a request from the upper control terminal 12 will be described.

As indicated by a route "a" in Fig.30, the upper control terminal 12 issues the following command to the system controller 14.
OPEN MD = PLAY RSC = IOP1 PATH = file1 (command 13)

The upper control terminal 12 issues to the system controller 14 a command to "PLAY", that is, "OPEN" in a reproduction mode, a file indicated by the file name "file 1" from a resource of the resource name "IOP1", that is, the input/output processing section 32. When the EMT 71 has received the control command expressed by the command 13 from the upper control device 12 at step S311, the EMT 71 retrieves the resource designated by the parameter RSC in accordance with the OPEN command. That is, the EMT 71 issues the following opening request to the RIMT 72, as indicated by a route "b".
OPEN_PATH RSC = IOP1 (command 14)

Then, retrieval from the resource management information table 72a of the RIMT 72 is carried out, and the processing goes to step S313. The structure of the resource management information table 72a is the same as those of Fig.4 and Table 27. However, to simplify the description, only the necessary information such as resource name, device ID and locked ID is shown. The locked ID is the stream ID in the RIMT 72. Although this is managed as the locked ID, the stream ID may be used in place of the locked ID.

At step S313, it is discriminated whether the designated resource has been opened or not, and the subsequent processing differs in accordance with the result thereof.

Specifically, retrieval from the resource management information table 72a of the RIMT 72 is carried out. If there is no locked ID corresponding to the resource name IOP1 corresponding to the input/output processing section 32, the resource has not been opened. Therefore, the result is "NO" and the processing goes to step S315. If the locked ID exists, the resource has already been opened. Therefore, the result is "YES" and the processing goes to step S314.

If the resource of the resource name IOP1 corresponding to the input/output processing section 32 has been already opened (YES at step S313), the processing shifts to step S314 and the result of execution of the opening command, that is,
CSTAT ERROR
is issued to the upper control terminal 12. Then, the processing ends.

On the other hand, if the result is NO at step S313, the processing goes to step S315, and a unique locked ID is generated since the locked ID corresponding to the resource name IOP1 is unregistered. Then, the generated locked ID is registered to the resource management table 72a and the following response is sent back to the EMT 71 as indicated by a route "c".
RET_OPEN_PATH SID = 1
Then, the processing goes to step S316.

At step S316, it is discriminated whether the parameter MD in the control command from the upper control device is PLAY or not. That is, if there is
MD = PLAY
in the control command from the upper control terminal, the result is YES and the processing goes to step S318. If not, the result is NO and the processing goes to step S317.

At step S318, the EMT 71 registers the stream ID corresponding to the resource name IOP1 corresponding to the input/output processing section 32 and the file name designated by the parameter PATH to the stream management table 71a. Then, the following command is sent back to the upper control terminal 12 as indicated by a route "d" and this series of processing ends.
RET_OPEN_PATH SID = 1

Meanwhile, if there is no "MD = PLAY" in the control command (that is, NO) at step S316, the processing shifts to step S317 and the EMT 71 registers the stream ID corresponding to the resource name IOP1 corresponding to the input/output processing section 32, to the stream management table 71a. Then, a command similar to that of step S318 is sent back to the upper control terminal 12 and this series of processing ends.

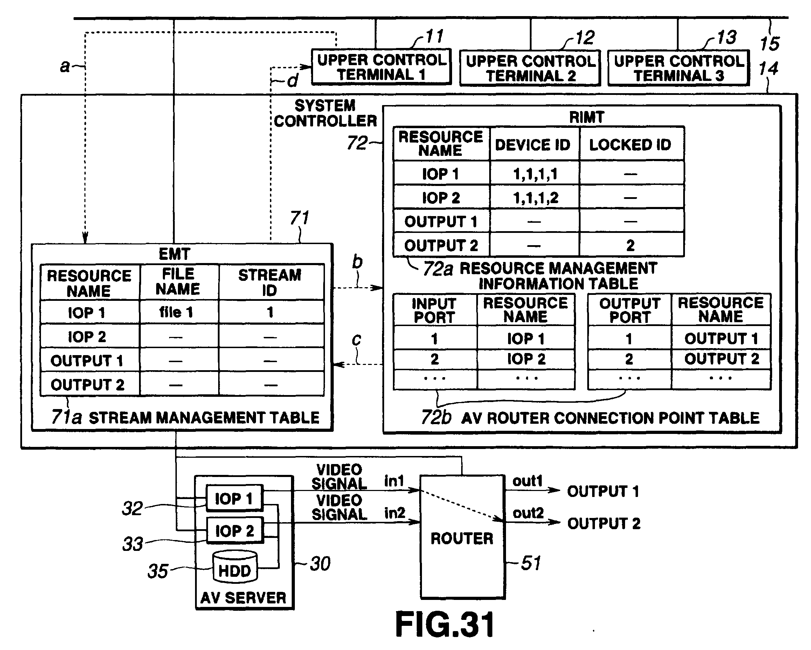

The procedure for the upper control terminal 12 to issue commands for reproduction/stop of AV data by using the stream ID obtained from the above-described response will now be described with reference to Figs.31 and 22.

First, in Fig. 31, the upper control device 12 issues the following command by using the stream ID.
PLAY SID = 1 (command 15)

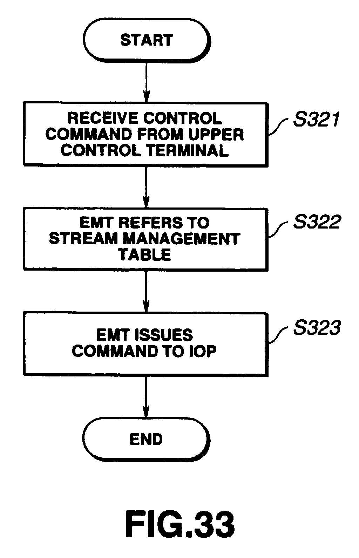

This command is a control command which instructs reproduction using the stream ID "1". In this manner, a very simple control command can be issued by using the stream ID. The system controller 14, having received the control command to which the stream ID is added as expressed by the command 15, executes a series of processing shown in Fig.33. Specifically, the EMT 71, having received the control command from the upper control device at step S321, shifts to step S322 and retrieves the target file name and resource name in accordance with the designated stream ID.

The processing then shifts to step S323. The EMT 71 generates a control command to reproduce the file of the file name "file 1" and issues this control command to the resource of the resource name retrieved from the stream management table 71a.

The control command is described as follows.
PLAY file 1

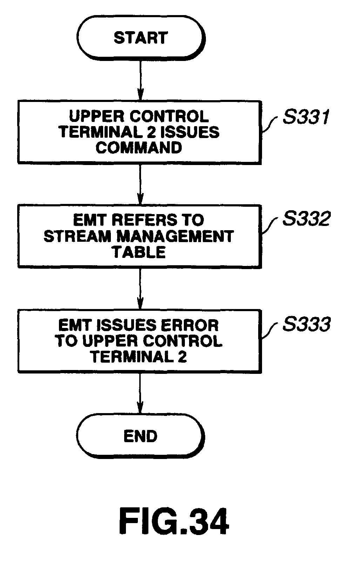

The series of processing ends and "file 1" is actually reproduced from the input/output processing section 32. In the following example, after the foregoing processing, the different upper control terminal 13 carries out reproduction of AV data by using the same input/output processing section 32. This example will be described with reference to Figs.31 and 34. In this case, the input/output processing section 32 is already being used by the upper control terminal 12. Therefore, how a reproduction command is issued in this case will be described with reference to Figs.31 and 34.

First, the upper control device 13 issues the following OPEN command to the system controller 14.
OPEN MD = PLAY RSC = IOP1 PATH = file2 (command 16)
That is, an opening command for a file "file2" is issued to the resource having the resource name "IOP1" (input/output processing section 32). The EMT 71, having received this command at step S331, shifts to step S332 and carries out retrieval with reference to the stream management table 71a using the resource name as a key. It is detected that the stream ID is registered to the section of IOP1 corresponding to the input/output processing section 32. The processing then goes to step S333.

At step S333, since the stream is already generated, the following error is issued to the upper control terminal 13 so as to notify the upper control terminal 13 of failure of stream generation.
CSTAT ERROR

From the above response, the upper control terminal 13 learns that the input/output processing section 32 (IOP1) is in use, and can determine whether reproduction should be suspended or another input/output processing section 37 (IOP2) should be used.

Meanwhile, for the upper control terminal 12, occupancy of the specified input/output processing section 32 and reproduction of AV data therefrom are guaranteed by obtaining the stream ID. Therefore, use of the input/output processing section 32 by another control terminal during reproduction of AV data and interruption of reproduction of image signals will not take place. In short, the upper control terminal 12 can restrict the use by another upper control terminal and can perform exclusive control.

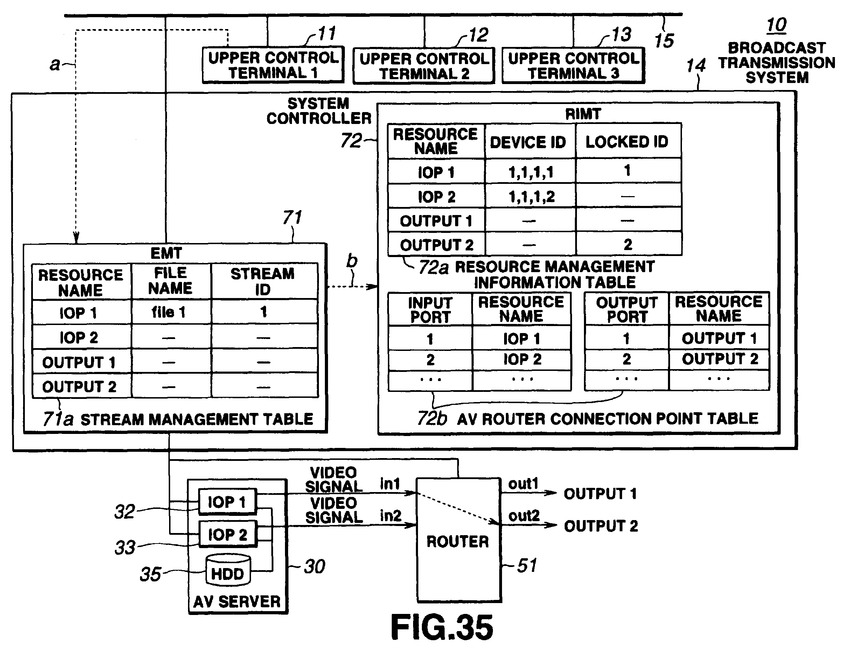

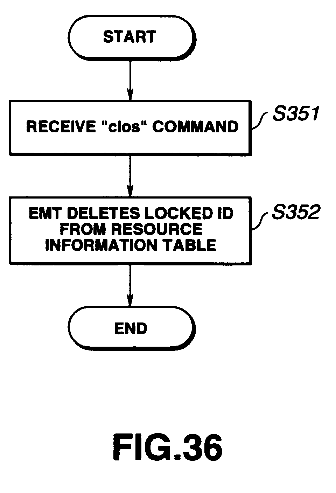

Extinction of the currently used stream and permission of use of the resource to another upper control terminal will now be described with reference to Figs.35 and 36.

It is assumed that the upper control terminal 11 has the stream ID "1" already provided with respect to the resource IOP1 (input/output processing section 32) from the system controller 14. With respect to this stream ID, the following control command instructing extinction of the stream is issued from the upper control device.
CLOS SID = 1 (command 17)
Having received this command, the system controller 14 executes a series of processing shown in Fig.36. Specifically, when the command instructing extinction of the stream as expressed by the command 17 is received at step S351, the processing shifts to step S352.

At step S352, as the EMT 71 issues the following command to the RIMT 72 as indicated by a route "b", the RIMT 72 deletes the locked ID designated by the SID parameter from the resource management information table 72a.
CLOS_PATH SID = 1

At this point, the resource name having the locked ID corresponding to the stream ID "2" is retrieved from the resource management information table, and the locked ID of this resource is deleted. In this state, even if another upper control terminal 13 issues the following command, stream generation is successfully carried out.
OPEN MD = PLAY RSC = IOP1 PATH = file2

By thus obtaining the stream, exclusive use of the designated source only during the period from generation to extinction of the stream ID is made possible. During this period, competition with the upper control terminal which has not obtained the stream ID can be avoided.

A specific example in which control of the connection point of the AV router is carried out by using a method of stream connection in the system constituted by the AV server and the router will now be described. Although partly explained already with reference to Fig.27, this example will be described in detail hereinafter mainly with respect to the stream.

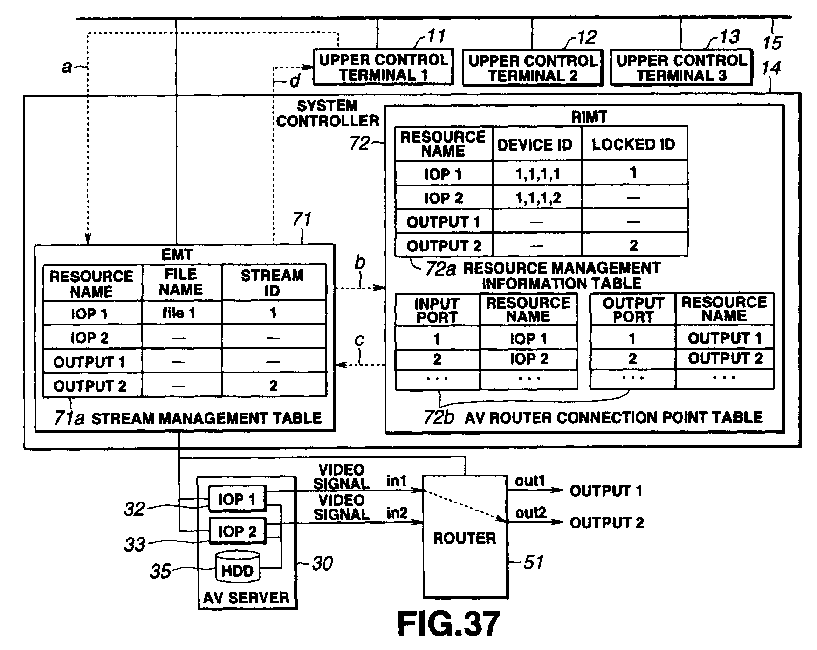

First, the overall structure of the broadcast transmission system 10 used in this example is shown in Fig.37. The structure is similar to those of Figs.30 and 31 and therefore will not be described further in detail.

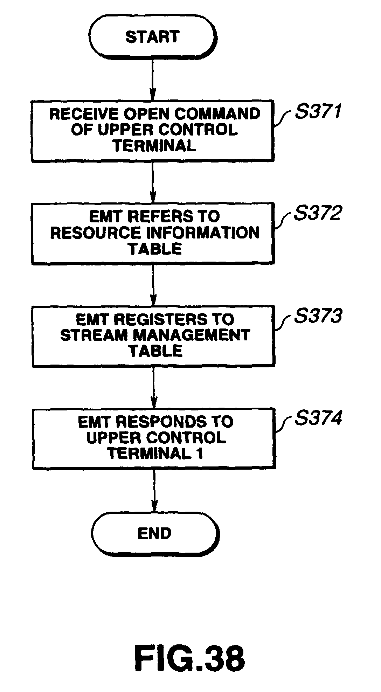

Next, the operation of connection control using the stream of the router will be described in detail with reference to Figs.37 and 38. On the assumption that the file "file 1" of the input/output processing section 32(IOP1) is opened by the upper control terminal 12 in accordance with the procedure shown in Figs.30 and 32, a series of processing for the upper control terminal 12 to open the output channel OUTPUT2 as a stream will be described with reference to Fig.37 and the flowchart of Fig.38.

The upper control terminal 12 first issues the OPEN command.
OPEN MD = FIFO RSC = OUTPUT2 (command 18)

In this case, a FIFO mode of first-in first-out memory means is designated by the parameter MD, and it is indicated that this resource does not reproduce AV data. Even when the stream is generated, the file name is not registered to the stream management table 71a.

The EMT 71, having received this OPEN command at step S371, shifts to step S372 and issues the following OPEN request to the RIMT 72 as indicated by a route
OPEN_RES RSC = OUTPUT2

In this case, OPEN_RES is used whereas OPEN_PATH is used in the case of OPEN PLAY. In this description, such expression need not be distinguished. In the actual system, OPEN_PATH is used in the case of the resource for reproducing the file, and the resource is thus distinguished from the virtually defined resource such as OUTPUT2.

At step S373, retrieval from the resource information table 72a is carried out to confirm that there is no locked ID corresponding to the resource name OUTPUT2. Then, a unique locked ID is generated and the generated locked ID is registered to the table. The following response is sent back to the EMT 71 as indicated by a route "c" and the processing goes to step S374.
RET_OPEN_RES SID = 2

If the locked ID exists, the resource is already used. Therefore, an error is sent back to the EMT 71 and an error command indicating failure of the OPEN command is sent back to the upper control terminal 12 from the EMT 71.

At step S374, the EMT 71 registers the stream ID corresponding to the resource name OUTPUT2, to the stream management table 71a, and sends the following response to the upper control terminal 12 as indicated by a route "d".
CSTAT SID = 1

The upper control terminal 12 carries out connection point control of the AV router 51 by using this stream ID.

In accordance with the foregoing procedure, connection point control of the AV router 51 is carried out, and the output of the input/output processing section 32 is connected to the output channel OUTPUT2. After that, by issuing a reproduction command to the stream of the input/output processing section 32 as described above, an AV signal outputted from the input/output processing section 32 will be outputted to the output channel OUTPUT2.

If another upper control terminal issues the stream opening command with respect to the output channel OUTPUT2, the command ends in failure as described above and cannot be executed until the upper control terminal 12 extinguishes the stream to the output channel OUTPUT2 by using a CLOS command. In short, the route of AV signals can be exclusively used by carrying out stream connection.

The flow of stream opening by the EMT 71 is similar to the flow shown in the flowchart of Fig.32.

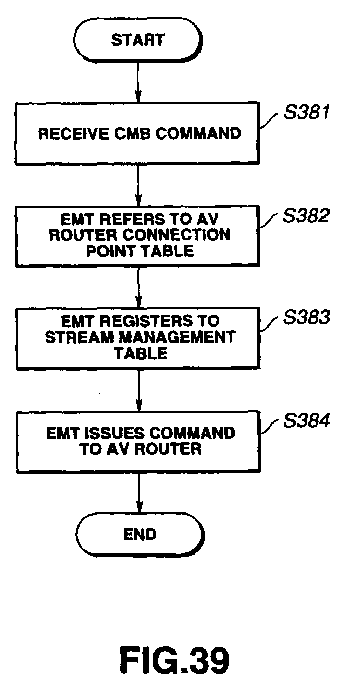

A series of procedure for the upper control terminal 12 to issue the above-mentioned CMB command to the system controller 14 so as to secure the stream will now be described with reference to Fig.37 and the flowchart of Fig.39.

This procedure is started as the upper control device 12 issues the following control command "CMB" to the system controller 14 as indicated by a route "a" in Fig.37.
CMB SRC_SID = 1 DEST_SID = 1 (command 19)

This command is a connection command indicating connection from the resource IOP1 secured by the stream ID "1" as the source to the resource OUTPUT2 secured by the stream ID "2" as the destination, as described above. The system controller, having issued the "CMB" command, starts the series of processing shown in Fig.39. Specifically, when the upper control device has issued the "CMB" command at step S381, retrieval from the stream information table 71a is carried out to obtain the resource name IOP1 corresponding to the stream ID designated by the SRC_SID parameter and the resource name OUTPUT2 corresponding to the stream ID designated by the DEST_SID parameter. After that, the EMT 71 issues the following command to the RIMT 72 as indicated by a route "b", and the processing goes to step S383.
CMB_STREAM SRC = IOP1 DEST = OUTPUT2

At step S383, on receiving the command, the RIMT 72 carries out retrieval from the AV router connection point table 72b and sends the input port number of the resource IOP1 corresponding to the input/output processing section 32 designated by the SRC parameter and the output port number of the resource OUTPUT2 designated by the DEST parameter to the EMT 71 in accordance with the following response, as indicated by a route "c". Then, the processing goes to step S384.

At step S384, the EMT 71 issues the following command to the AV router 51 by using the connection point information obtained at step S383.
CrossPointSelect inport = 1 outport = 2

In accordance with the foregoing procedure, connection point control of the AV router 51 is carried out and the output of the input/output processing section 32 (IOP1) is connected to the output channel OUTPUT2. After that, by issuing a reproduction command to the stream of the input/output processing section 32 as described above, an AV signal outputted from the input/output processing section 32 will be outputted to the output channel OUTPUT2.

Even if another upper control terminal tries to output a certain AV signal to the output channel OUTPUT2, stream opening to the output channel OUTPUT2 ends in failure as described above and cannot be executed until the upper control terminal 12 extinguishes the stream to the output channel OUTPUT2 by using a CLOS command. In short, the route of AV signals can be exclusively used by carrying out stream connection.

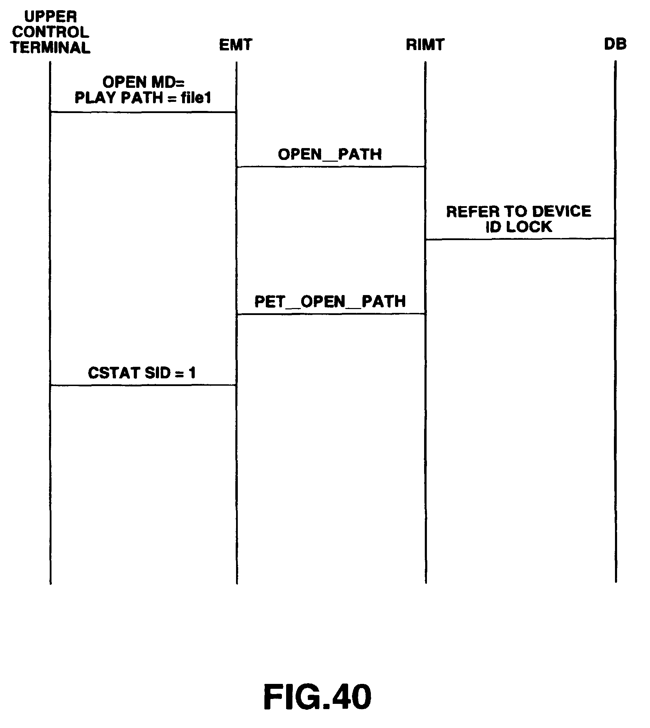

The series of procedure for issuing the OPEN command described with reference to Figs.30 and 31 can be expressed as the flow of commands between the upper control terminal 12, the EMT 71 and the database (DB) such as the resource information table 72b of the RIMT 72, as shown in Fig.40.

Specifically, the command of
OPEN MD = PLAY PATH = file1
is issued to the EMT 71 from the upper control terminal 12. Then, the command of
OPEN_PATH
is issued to the RIMT 72 from the EMT 71. The RIMT 72 refers to the lock of the device ID in the database such as the resource information table 72b.

Then, the RIMT 72 issues the command of
RET_OPEN_PATH
to the EMT 71. From the EMT 71, the command of
CSTAT SID = 1
is issued to the upper control terminal 12. The foregoing is the procedure up to the state where the stream is sent to the upper control terminal 12 in accordance with the command issued from the upper control terminal 12. Similar procedures may be carried out in the processes subsequent thereto.

## Claims

1. A device control apparatus for controlling the state of use of a plurality of devices, the apparatus comprising:
upper control terminal means for issuing a first control command instructing reserved use of the device; and
device allocation control means for inhibiting upper control terminal means except for the upper control terminal means which issued the control command, of a plurality of upper control terminal means, from using the device of the reserved use instructed by the firs control command, on the basis of the first control command from the upper control terminal means.

2. The device control apparatus as claimed in claim 1, wherein even when a second control command instructing occupancy of the device of the reserved use instructed by the first control command is received from the upper control terminal means except for the upper control terminal means which issued the first control command, the device allocation control means inhibits the use by the upper control terminal means which issued the second control command.

3. The device control apparatus as claimed in claim 2, wherein when the first control command is received from the upper control terminal means, the device allocation control means registers information including the upper control terminal means which issued the first control command and the device of the reserved use to a management information database of the device, and when the second control command is received from the upper control command and the device instructed by the second control command is coincident with the device of the management information database, the device allocation control means transmits a control command indicating failure of the second control command to the upper control terminal means which issued the second control command and thus inhibits the use by the upper control terminal means.

4. The device control apparatus as claimed in claim 1, wherein when the first control command instructing reservation of the same device is received from the plurality of upper control terminal means, the device allocation control means inhibits the use by the upper control terminal means except for the upper control terminal means which issued the first control command of the highest priority, on the basis of priority added to the first control command.

5. The device control apparatus as claimed in claim 4, wherein the device allocation control means has a management information database for registering information including the terminal user of the upper control terminal means which issued the first control command, the device of reserved use and the priority added to the first control command, and inhibits the use by the upper control terminal means except for the upper control terminal means which issued the first control command of the highest priority with reference to the management information database.

6. The device control apparatus as claimed in claim 1, wherein the device allocation control means inhibits the use of the plurality of devices added to the first control command by the upper control terminal means except for the upper control terminal means which issued the first control command, of the plurality of upper control terminal means, on the basis of reserved use of a group to which the plurality of devices added to the first control command belong.

7. The device control apparatus as claimed in claim 6, wherein the device allocation control means has a management information database for registering information including the user of the upper control terminal means which issued the first control command, the device name instructed by the first control command and the group name to which the plurality of devices belong, and
even when a second control command instructing occupancy of the plurality of devices instructed by the first control command is received from the upper control terminal means except for the upper control terminal means which issued the first control command with reference to the management information database, the device allocation control means transmits a control command indicating failure of the second control command to the upper control terminal means which issued the second control command and thus inhibits the use by the upper control terminal means except for the upper control terminal means which issued the first control command.

8. The device control apparatus as claimed in claim 1, wherein the device includes each recording medium which is non-linearly accessible to each input/output processing means constituting a video server, and each input channel to which data including a plurality of video and/or audio data inputted from outside or outputted from the video server are inputted and each output channel for outputting the data to be outputted to outside or to be outputted to the video server, the input channel and output channel constituting switching means.

9. A device control method for controlling the state of use of a plurality of devices, the method comprising:
a first step of receiving a first control command instructing reserved use of the device from upper control terminal means; and
a second step of inhibiting upper control terminal means except for the upper control terminal means which issued the control command, of a plurality of upper control terminal means, from using the device of the reserved use instructed by the firs control command, on the basis of the first control command.

10. The device control method as claimed in claim 9, wherein at the second step, even when a second control command instructing occupancy of the device of the reserved use instructed by the first control command is received from the upper control terminal means except for the upper control terminal means which issued the first control command, the use by the upper control terminal means which issued the second control command is inhibited.

11. The device control method as claimed in claim 9, wherein at the second step, when the first control command is received from the upper control terminal means, information including the upper control terminal means which issued the first control command and the device of the reserved use is registered to a management information database of the device, and when the second control command is received from the upper control command and the device instructed by the second control command is coincident with the device of the management information database, a control command indicating failure of the second control command is transmitted to the upper control terminal means which issued the second control command, thus inhibiting the use by the upper control terminal means.

12. The device control method as claimed in claim 9, wherein at the second step, when the first control command instructing reservation of the same device is received from the plurality of upper control terminal means, the use by the upper control terminal means except for the upper control terminal means which issued the first control command of the highest priority is inhibited on the basis of priority added to the first control command.

13. The device control method as claimed in claim 12, wherein the second step has a management information database for registering information including the terminal user of the upper control terminal means which issued the first control command, the device of reserved use and the priority added to the first control command, and inhibits the use by the upper control terminal means except for the upper control terminal means which issued the first control command of the highest priority with reference to the management information database.

14. The device control method as claimed in claim 9, wherein at the second step, the use of the plurality of devices added to the first control command by the upper control terminal means except for the upper control terminal means which issued the first control command, of the plurality of upper control terminal means, is inhibited on the basis of reserved use of a group to which the plurality of devices added to the first control command belong.

15. The device control method as claimed in claim 14, wherein a management information database is provided for registering information including the user of the upper control terminal means which issued the first control command, the device name instructed by the first control command and the group name to which the plurality of devices belong, and
even when a second control command instructing occupancy of the plurality of devices instructed by the first control command is received from the upper control terminal means except for the upper control terminal means which issued the first control command with reference to the management information database, a control command indicating failure of the second control command is transmitted to the upper control terminal means which issued the second control command, thus inhibiting the use by the upper control terminal means except for the upper control terminal means which issued the first control command.

16. The device control method as claimed in claim 9, wherein the device includes each recording medium which is non-linearly accessible to each input/output processing means constituting a video server, and each input channel to which data including a plurality of video and/or audio data inputted from outside or outputted from the video server are inputted and each output channel for outputting the data to be outputted to outside or to be outputted to the video server, the input channel and output channel constituting switching means.

17. A device control apparatus for controlling the state of use of a plurality of devices, the apparatus comprising:
upper control terminal means for issuing a first control command instructing permission of occupancy and use of the device; and
device allocation control means for inhibiting upper control terminal means except for the upper control terminal means, of a plurality of upper control terminal means, from using the device instructed by the first control command, on the basis of priority added to the first control command from the upper control terminal means.

18. The device control apparatus as claimed in claim 17, wherein when the first control command instructing permission of occupancy and use of the same device is received from the plurality of upper control terminal means, the device allocation control means inhibits the occupancy and use of the device by the upper control terminal means except for the upper control terminal means which issued the first control command of the highest priority on the basis of the priority.

19. The device control apparatus as claimed in claim 18, wherein the device allocation control means has an occupancy management information database constituted by the device for which a notification of permission of occupancy is issued, the upper control terminal means which issued the first control command and the priority added to the first control command, and when the first control command instructing permission of occupancy of the same device as the device registered to the occupancy management information database is received from the upper control terminal means except for the upper control terminal means registered to the database, of the plurality of upper control terminal means, the device allocation control means compares the priority added to the first control command and inhibits the upper control terminal means except for the upper control terminal means which issued the first control command of the highest priority, from using the device.

20. The device control apparatus as claimed in claim 19, wherein the device allocation control means compares the priority on the basis of the database, and when the priority registered to the database is lower than the priority added to the upper control terminal means which issued the first control command, the device allocation control means issues a control command indicating cancel of the occupancy and use to the upper control terminal means having the priority registered to the database.

21. The device control apparatus as claimed in claim 19, wherein when a second control command instructing permission of occupancy and use of the plurality of devices is received from the upper control terminal means, the device allocation control means compares the lowest priority of the priorities registered to the database of the plurality of devices instructed by the second control command, of the plurality of devices registered to the database, with the priority added to the second control command, and inhibits the upper control terminal means except for the upper control terminal means which issued the control command of the higher priority, from using the devices.

22. The device control apparatus as claimed in claim 17, wherein the device includes each recording medium which is non-linearly accessible to each input/output processing means constituting a video server, and each input channel to which data including a plurality of video and/or audio data inputted from outside or outputted from the video server are inputted and each output channel for outputting the data to be outputted to outside or to be outputted to the video server, the input channel and output channel constituting switching means.
